(19) Europäisches Patentamt
European Patent Office
Office européen des brevets

(11) EP 2 551 317 A1

# (12) EUROPEAN PATENT APPLICATION

(43) Date of publication:
**30.01.2013 Bulletin 2013/05**

(21) Application number: **12178473.0**

(22) Date of filing: **30.07.2012**

(51) Int Cl.:
***C09J 7/02*** *(2006.01)* ***C09J 5/06*** *(2006.01)*
***C09J 133/00*** *(2006.01)*

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **28.07.2011 JP 2011166048**
**14.05.2012 JP 2012110946**

(71) Applicant: **Nitto Denko Corporation**
**Ibaraki-shi**
**Osaka 567-8680 (JP)**

(72) Inventors:
- **Miki, Kaori**
**Ibaraki-shi, Osaka 567-8680 (JP)**
- **Niwa, Masahito**
**Ibaraki-shi, Osaka 567-8680 (JP)**

(74) Representative: **Grünecker, Kinkeldey, Stockmair & Schwanhäusser**
**Leopoldstrasse 4**
**80802 München (DE)**

## (54) Pressure-sensitive adhesive sheet

(57) Provided is a pressure-sensitive adhesive sheet that maintains a high adhesive force and adhesion reliability (particularly, repulsion resistance and holding power) when the sheet is bonded, and can be easily peeled off from an adherend to easily separate and disassociate a bonded portion when the sheet is peeled off from the adherend.

Solution

The pressure-sensitive adhesive sheet according to the present invention is a pressure-sensitive adhesive sheet having an adhesive layer on at least one surface of a substrate, wherein
the substrate is a heat-shrinkable film, and
the adhesive layer comprises an adhesive composition comprising an acrylic copolymer and a thermally expandable micro particle, the acrylic copolymer comprising a monomer mixture of the following monomers (a1), (a2), and (a3) in the following contents as a constituent:
(a1) an alkyl (meth)acrylate monomer having an alkyl group having 4 to 12 carbon atoms and having a glass transition temperature less than 0°C when the monomer is formed into a homopolymer: 40 to 90% by weight,
(a2) a monomer having at least one nitrogen atom and one ethylenically unsaturated bond within the molecule: 5 to 40% by weight, and
(a3) a monomer having one ethylenically unsaturated bond within the molecule and having a glass transition temperature of not less than 0°C when the monomer is formed into a homopolymer ((a2) is excluded): 0 to 40% by weight(the content (% by weight) represents the content of each monomer based on the total weight of the monomers (a1), (a2), and (a3) (100% by weight)).

[Fig.1]

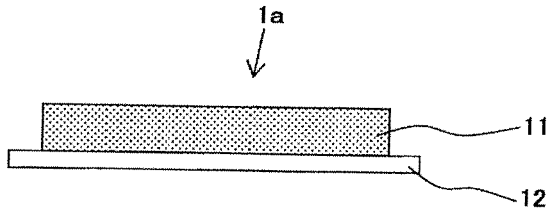


EP 2 551 317 A1

## Description

### Technical Field

The present invention relates to a pressure-sensitive adhesive sheet that maintains a high adhesive force and adhesion reliability (particularly, repulsion resistance and holding power) when the sheet is bonded, and can be easily peeled off to separate and disassociate a bonded portion when the sheet is peeled.

### Background Art

Adhesive tapes or sheets (a "tape or sheet" may be simply referred to as a "tape" or a "sheet" in some cases) are used in various applications in the related art. Representative examples of the pressure-sensitive adhesive sheet include acrylic adhesive sheets (acrylic pressure-sensitive adhesive sheets) including an adhesive layer (pressure-sensitive adhesive layer) formed using an acrylic adhesive composition (acrylic pressure-sensitive adhesive composition).

Moreover, recently, for increase in environmental concerns, savings in resources and recycling have been increasingly demanded in the fields in which the pressure-sensitive adhesive sheet is used. For example, in the fields of automobiles, machines, electric appliances, building materials, and the like, the acrylic pressure-sensitive adhesive sheet particularly needs to satisfy the compatibility of high adhesiveness to a metallic adherend with easy peelability from the viewpoint of improvement in yield, rework in the process, recycling, workability, and the like.

As the acrylic pressure-sensitive adhesive sheet, for example, as an acrylic pressure-sensitive adhesive sheet having a high adhesive force and adhesion reliability when the sheet is bonded, an acrylic pressure-sensitive adhesive sheet having a pressure-sensitive adhesive layer formed with an air bubble-containing viscoelastic composition that is a viscoelastic composition containing air bubbles, hollow microspheres, and a surface active agent is known, in which the surface active agent is a fluorine-based compound having an oxy($C_{2-3}$)alkylene group and a fluorinated hydrocarbon group in the molecule (see Patent Literature 1). The acrylic pressure-sensitive adhesive sheet has a problem such that it cannot be easily peeled off at the time of peeling.

Moreover, as the acrylic pressure-sensitive adhesive sheet, for example, as a acrylic pressure-sensitive adhesive sheet that can be easily peeled off at the time of peeling, an acrylic pressure-sensitive adhesive sheet having an adhesive layer formed with an adhesive composition is known in which the adhesive composition comprises an acrylic polymer prepared by copolymerizing an alkyl (meth)acrylate ester having an alkyl group having 4 to 12 carbon atoms as a main component monomer with 0.5 to 20% by weight of a carboxyl group-containing radical polymerizable monomer based on the total amount of the monomers, and 0.5 to 20 parts by weight of an epoxy crosslinking agent and 0.1 to 5 parts by weight of a polyisocyanate compound based on 100 parts by weight of the acrylic polymer (see Patent Literature 2). The acrylic pressure-sensitive adhesive sheet has a problem such as a low adhesive force and adhesion reliability when the sheet is bonded.

In these acrylic pressure-sensitive adhesive sheets, it is difficult to satisfy the compatibility between high adhesiveness to an adherend and easy peelability.

Furthermore, in order to facilitate peel off from the adherend, it is known that a thermally expandable microsphere is blended in an adhesive layer, and heated at the time of peeling; thereby, the adhesive layer is foamed and peeled off (see Patent Literature 3). It is also known that a heat-shrinkable film is used for a substrate, and the pressure-sensitive adhesive sheet is shrunk and peeled off by heating at the time of peeling (see Patent Literatures 4 and 5). Further, it is known that these methods are combined (see Patent Literatures 6 to 10).

In the pressure-sensitive adhesive sheets according to Patent Literatures 3 to 10, however, mainly the peelability is referred to as the problem to be solved, adhesive properties and adhesion reliability (particularly, repulsion resistance and holding power) as the pressure-sensitive adhesive sheet are not examined. Moreover, the adhesive layer is only described broadly as an acrylic adhesive, and a relationship between a specific composition and the adhesive properties and adhesion reliability is not described. Furthermore, the compatibility between high adhesiveness to an adherend and easy peelability is not examined.

### Citation List

### Patent Literature

Patent Literature 1: Japanese Unexamined Patent Application Publication (JP-A) No. 2006-22189
Patent Literature 2: Japanese Unexamined Patent Application Publication (JP-A) No. 2001-247832

Patent Literature 3: Japanese Unexamined Patent Application Publication (JP-A) No. 2009-120808
Patent Literature 4: Japanese Unexamined Patent Application Publication (JP-A) No. 2000-319600
Patent Literature 5: Japanese Unexamined Patent Application Publication (JP-A) No. 2001-200220
Patent Literature 6: Japanese Unexamined Patent Application Publication (JP-A) No. S61-78887
Patent Literature 7: Japanese Unexamined Patent Application Publication (JP-A) No. H3-63381
Patent Literature 8: Japanese Unexamined Patent Application Publication (JP-A) No. H4-8782
Patent Literature 9: Japanese Unexamined Patent Application Publication (JP-A) No. 2010-254789
Patent Literature 10: National Publication of International Patent Application No. 2011-500902

Summary of Invention

Problems to be Solved by the Invention

An object of the present invention is to provide a pressure-sensitive adhesive sheet that maintains a high adhesive force and adhesion reliability (particularly, repulsion resistance and holding power) when the sheet is bonded, and can be easily peeled off from an adherend to easily separate and disassociate a bonded portion when the sheet is peeled off from the adherend.
Further, another object of the present invention is to provide a pressure-sensitive adhesive sheet that maintains a high adhesive force and adhesion reliability (particularly, repulsion resistance) particularly to a metallic adherend when the sheet is bonded, and can be easily peeled off from an adherend to easily separate and disassociate a bonded portion when the sheet is peeled off from the adherend.

Means for Solving the Problems

As extensive research in order to achieve the objects, the present inventors found out that a heat-shrinkable film is used for a substrate, and an acrylic copolymer comprising a monomer mixture containing the following monomers (a1), (a2), and (a3) in the following contents as a constituent and a thermally expandable micro particle are contained in an adhesive composition that forms an adhesive layer; this provides a pressure-sensitive adhesive sheet that has a high adhesive force and adhesion reliability (particularly, repulsion resistance and holding power) when the sheet is bonded, and can be easily separated and disassociated by heating the sheet to reduce an adhesive force when a bonded portion is separated and disassociated. Thus, the present invention has been completed.

(a1) an alkyl (meth)acrylate monomer having an alkyl group having 4 to 12 carbon atoms, and having a glass transition temperature less than 0°C when the monomer is formed into a homopolymer: 40 to 90% by weight
(a2) a monomer having at least one nitrogen atom and one ethylenically unsaturated bond within the molecule: 5 to 40% by weight
(a3) a monomer having one ethylenically unsaturated bond within the molecule, and having a glass transition temperature of not less than 0°C when the monomer is formed into a homopolymer ((a2) is excluded): 0 to 40% by weight

(the content (% by weight) represents the content of each monomer in the total weight of the monomers (a1), (a2), and (a3) (100% by weight))

Namely, the present invention provides a pressure-sensitive adhesive sheet having an adhesive layer on at least one surface of a substrate, wherein
the substrate is a heat-shrinkable film, and
the adhesive layer comprises an adhesive composition comprising an acrylic copolymer and a thermally expandable micro particle, the acrylic copolymer comprising a monomer mixture containing the following monomers (a1), (a2), and (a3) in the following contents as a constituent:

(a1) an alkyl (meth)acrylate monomer having an alkyl group having 4 to 12 carbon atoms, and having a glass transition temperature less than 0°C when the monomer is formed into a homopolymer: 40 to 90% by weight,
(a2) a monomer having at least one nitrogen atom and one ethylenically unsaturated bond within the molecule: 5 to 40% by weight, and

(a3) a monomer having one ethylenically unsaturated bond within the molecule, and having a glass transition temperature of not less than 0°C when the monomer is formed into a homopolymer ((a2) is excluded): 0 to 40% by weight

(the content (% by weight) represents the content of each monomer in the total weight of the monomers (a1), (a2), and (a3) (100% by weight)).

The content of the thermally expandable micro particle is preferably 10 to 200 parts by weight based on 100 parts by weight of the monomer mixture.
The monomer (a2) is preferably at least one monomer selected from the group consisting of N,N-dimethylacrylamide, N-vinyl-2-pyrrolidone, and N-vinyl-2-caprolactam.
The monomer (a3) is preferably a (meth)acrylate monomer having a structure in which a (meth)acryloyloxy group is boned to a tertiary carbon atom, and having a glass transition temperature of not less than 0°C when the monomer is formed into a homopolymer, or a (meth)acrylate monomer having a structure in which a (meth)acryloyloxy group is bonded to a carbon atom that constitutes a ring of a monocyclic or polycyclic alicyclic hydrocarbon, and having a glass transition temperature of not less than 0°C when the monomer is formed into a homopolymer.
The monomer (a3) is preferably at least one monomer selected from the group consisting of tert-butyl (meth) acrylate, cyclohexyl (meth)acrylate, isobornyl (meth)acrylate, 1,4-cyclohexanedimethanol mono(meth)acrylate, and dicyclopentanyl (meth)acrylate.
The heat-shrinkable film is preferably a heat-shrinkable film that shrinks not less than 5% at a temperature of 70 to 180°C.

Advantageous Effects of Invention

The pressure-sensitive adhesive sheet according to the present invention has the configuration above, and maintains a high adhesive force and adhesion reliability (particularly, repulsion resistance and holding properties) when the sheet is bonded, and can be easily peeled off from an adherend to easily separate and disassociate a bonded portion when the sheet is peeled off from the adherend. Particularly, the pressure-sensitive adhesive sheet according to the present invention has a high adhesive force and adhesion reliability (particularly, repulsion resistance) to a metallic adherend when the sheet is bonded, and can be easily separated and disassociated by heating the sheet to reduce an adhesive force when a bonded portion is separated and disassociated.

Brief Description of Drawings

[Fig. 1] Fig. 1 is a schematic sectional view showing a first step in Production Example 1.
[Fig. 2] Fig. 2 is a schematic sectional view showing a second step in Production Example 1.
[Fig. 3] Fig.3 is a schematic sectional view showing a third step in Production Example 1.
[Fig. 4] Fig. 4 is a schematic sectional view showing an adhesive layer obtained in Production Example 1.
[Fig. 5] Fig. 5 is a schematic sectional view showing a fourth step in Production Example 1.
[Fig. 6] Fig. 6 is a schematic sectional view showing a pressure-sensitive adhesive sheet obtained in Production Example 1.
[Figure 7] Figure 7 is a schematic sectional view showing another example of the pressure-sensitive adhesive sheet according to the present invention.

Mode for Carrying Out the Invention

(Substrate)

The pressure-sensitive adhesive sheet according to the present invention is a pressure-sensitive adhesive sheet having an adhesive layer on at least one surface of a substrate, wherein the substrate is a heat-shrinkable film.
The heat-shrinkable film is a film that shrinks in at least any uniaxial direction by heating by utilizing internal stress or the like based on orientation of molecules of the stretch film. In the present invention, desirably used is a heat-shrinkable film in which the shrinkage rate of the main shrink direction particularly at a temperature of 70 to 180°C (for example, at 80°C, 170°C, or the like) evaluated by the following method is not less than 5%. The shrinkage rate is more preferably not less than 8%, still more preferably not less than 10%, and particularly preferably not less than 20% (usually, not more than 90%). At a shrinkage rate not less than 5%, a force to pull off the adhesive layer from an adherend, and allows the sheet to be efficiently peeled off. On the other hand, at a shrinkage rate less than 5%, an amount of deformation may be small, and may prevent the sheet from being efficiently peeled off.

(Method for measuring shrinkage rate)

The heat-shrinkable film cut into a square (such that one side is parallel to the flow direction) of any size (for example, approximately 20 mm x 20 mm) is placed in a hot air dryer, and subjected to a heat treatment at a predetermined temperature for 4 minutes. The sizes of four sides before and after the heat treatment are measured, and the shrinkage rates of the four sides are calculated by the following equation. The value of the largest shrinkage rate among the four shrinkage rates is defined as the shrinkage rate in the main shrink direction.

$$\text{shrinkage rate (\%)} = [(\text{size before shrinkage} - \text{size after shrinkage})/\text{size before shrinkage}] \times 100$$

As described above, any heat-shrinkable film that shrinks at a temperature of 70 to 180°C can be used for the pressure-sensitive adhesive sheet according to the present invention. Desirably, in order to peel off the pressure-sensitive adhesive sheet more efficiently, the heat-shrinkable film shrinks at a temperature at which the thermally expandable micro particle expands, which will be described later. Namely, the pressure-sensitive adhesive sheet according to the present invention is peeled off by a synergistic effect of two actions: one is to heat and shrink the heat-shrinkable film as the substrate to deform the adhesive layer, and peel off the adhesive layer from the adherend; and the other is to expand and/or foam the thermally expandable micro particle, expand and deform the adhesive layer, deform the surface of the adhesive layer so as to be depressed and projected, and reduce or lose the adhesive force. Accordingly, shrinkage of the heat-shrinkable film and expansion of the thermally expandable microspheres preferably occur at the same timing. More specifically, the heat-shrinkable film shrinks preferably not less than 5%, and more preferably not less than 10% at the expanding temperature (or a foaming temperature) of the thermally expandable microsphere.

The thickness of the heat-shrinkable film is not particularly limited. For example, the thickness is preferably 10 to 500 μm, more preferably 12 to 200 μm, and still more preferably 15 to 100 μm. The heat-shrinkable film may have a form of a single layer, or may have a form of multi layers. When necessary, the heat-shrinkable film may be subjected to a variety of treatments such as a rear surface treatment, an antistatic treatment, and an undercoat treatment.

Examples of the material that forms the heat-shrinkable film in the present invention include polyolefin resins such as polypropylenes and polyethylenes, polyester resins such as polybutylene terephthalate and polyethylene terephthalate; polynorbornene resins, polyimide resins, polyamide resins, polyurethane resins, polyvinyl chloride resins, polyvinylidene chloride resins, and polystyrene resins. In the present invention, particularly a heat-shrinkable film formed with a polyester resin is desirably used. Advantageously, the heat-shrinkable film formed with a polyester resin has a high adhesive force (anchoring force) to the adhesive layer, and needs no undercoat treatment.

A commercially available product may be used as the heat-shrinkable film. The commercially available product of the heat-shrinkable film is not particularly limited. For example, a trade name "SPACECLEAN (made by TOYOBO CO., LTD.), a trade name "FANCYWRAP" (made by GUNZE LIMITED), a trade name "TORAYFAN" (made by Toray Industries, Inc.), a trade name "ARTON" (made by JSR Corporation), a trade name "ZEONOR" (ZEON Corporation), a trade name "SUNTEC" (made by Asahi Kasei Corporation), and the like can be used.

(Adhesive layer)

The adhesive layer used in the pressure-sensitive adhesive sheet according to the present invention comprises an adhesive composition comprising an acrylic copolymer and a thermally expandable micro particle, the acrylic copolymer comprising a monomer mixture containing the following monomers (a1), (a2), and (a3) in the following contents as a constituent:

(a1) an alkyl (meth)acrylate monomer having an alkyl group having 4 to 12 carbon atoms, and having a glass transition temperature less than 0°C when the monomer is formed into a homopolymer: 40 to 90% by weight,
(a2) a monomer having at least one nitrogen atom and one ethylenically unsaturated bond within the molecule: 5 to 40% by weight, and

(a3) a monomer having one ethylenically unsaturated bond within the molecule, and having a glass transition temperature of not less than 0°C when the monomer is formed into a homopolymer ((a2) is excluded): 0 to 40% by weight

(the content (% by weight) represents the content of each monomer in the total weight of the monomers (a1), (a2), and (a3) (100% by weight)).

Herein, the adhesive composition may be referred to as an "adhesive composition in the present invention" in some cases. Moreover, the adhesive layer formed with the adhesive composition in the present invention may be referred to as an "adhesive layer in the present invention" in some cases.

The meaning of the "adhesive composition" includes a "composition for forming an adhesive." Moreover, the "monomer mixture" means a "mixture of only monomer components." Further, the adhesive composition in the present invention may be referred to as a "thermally expandable micro particle-containing adhesive composition" in some cases.

Moreover, the adhesive layer used in the pressure-sensitive adhesive sheet according to the present invention comprises an adhesive composition comprising an acrylic copolymer and a thermally expandable micro particle, the acrylic copolymer comprising constitutional units derived from the following monomers (a1), (a2), and (a3) in the following contents:

(a1) an alkyl (meth)acrylate monomer having an alkyl group having 4 to 12 carbon atoms, and having a glass transition temperature less than 0°C when the monomer is formed into a homopolymer: 40 to 90% by weight,

(a2) a monomer having at least one nitrogen atom and one ethylenically unsaturated bond within the molecule: 5 to 40% by weight, and

(a3) a monomer having one ethylenically unsaturated bond within the molecule, and having a glass transition temperature of not less than 0°C when the monomer is formed into a homopolymer ((a2) is excluded): 0 to 40% by weight

(the content (% by weight) represents the content of each monomer in the total weight of the monomers (a1), (a2), and (a3) (100% by weight)).

Herein, the "ethylenically unsaturated bond" means a radically polymerizable carbon-carbon double bond. The group having the ethylenically unsaturated bond is not particularly limited, and examples thereof include a vinyl group, a vinylidene group, an allyl group, and a (meth)acryloyl group. Further, herein, "monofunctionality" means that one ethylenically unsaturated bond exists within the molecule, and "polyfunctionality" means that two or more ethylenically unsaturated bonds exist within the molecule.

The "glass transition temperature (Tg) when the monomer is formed into a homopolymer" means the "glass transition temperature (Tg) of a homopolymer formed with the monomer alone," and the glass transition temperature (Tg) of a polymer formed with only a monomer (may be referred to as a "monomer X" in some cases) as the monomer component. Specifically, "Polymer Handbook" (the third edition, John Wiley & Sons, Inc, 1989) shows the numeric value. The glass transition temperature (Tg) of a homopolymer not described in the document above is a value obtained by the measurement method below, for example. Namely, 100 parts by weight of a monomer X, 0.2 parts by weight of 2,2'-azobisisobutyronitrile, and 200 parts by weight of ethyl acetate as a polymerization solvent are placed in a reactor including a thermometer, a stirrer, a nitrogen introducing pipe, and a reflux cooling pipe, and stirred for 1 hour while nitrogen gas is introduced. Thus, oxygen is removed within the polymerization system, the temperature is raised to 63°C, and the reaction is made for 10 hours. Next, the solution is cooled to room temperature to obtain a homopolymer solution having a concentration of the solid content of 33% by weight. Next, the homopolymer solution is casted and applied onto a release liner, and dried to produce a test sample (sheet-like homopolymer) having a thickness of approximately 2 mm. Then, approximately 1 to 2 mg of the test sample is weighed and placed on an aluminum open cell. Using a temperature-modulated DSC (a trade name "Q-2000" made by TA Instruments-Waters LLC), a Reversing Heat Flow(specific heat component) behavior of the homopolymer is obtained under a nitrogen atmosphere at 50 ml/min at a temperature raising rate of 5°C/min. Referring to JIS-K-7121, the glass transition temperature (Tg) when the monomer is formed into a homopolymer is defined as a temperature at an intersection of a line located in the ordinate direction at an equal distance from a line extended from a base line on the lower temperature side and a line extended from a base line on the higher temperature side in the obtained Reversing Heat Flow and a curve showing gradual change of glass transition.

Preferably, the adhesive layer in the present invention is an acrylic adhesive layer containing at least an acrylic copolymer. The monomer mixture as the constituent of the acrylic copolymer contains preferably not less than 40% by

weight (more preferably not less than 50% by weight) of a monomer (acrylic monomer) having a (meth)acryloyl group within the molecule based on the total amount of the monomer components (100% by weight).

The acrylic copolymer can be obtained by polymerizing the monomer component (monomer unit) by a known or standard polymerization method. Examples of such a polymerization method include a solution polymerization method, an emulsion polymerization method, a bulk polymerization method, and a polymerization method by irradiation with an active energy ray (active energy ray polymerization method). Among these, preferable are the solution polymerization method and the active energy ray polymerization method, and more preferable is the active energy ray polymerization method from the viewpoint of transparency, moisture resistance, and cost of the adhesive layer.

The adhesive layer in the present invention is comprised of the adhesive composition in the present invention containing at least the acrylic copolymer and a thermally expandable micro particle. The adhesive layer in the present invention is obtained by using a composition that forms the adhesive layer in the present invention. The composition that forms the adhesive layer in the present invention may have any form, and examples thereof include an emulsion type, a solvent type (solution type), an active energy ray curable type, and a heat melting type (hot-melt type). Among these, preferable examples thereof include the solvent type composition and the active energy ray curable composition, and particularly preferable examples thereof include the active energy ray curable composition.

Preferable examples of the solvent type composition include compositions containing an acrylic copolymer as an essential component. Preferable examples of the active energy ray curable composition include compositions containing the monomer mixture as the constituent of the acrylic copolymer or a partially polymerized product thereof as an essential component. Among these, preferred is the active energy ray curable composition containing the monomer mixture as the constituent of the acrylic copolymer or a partially polymerized product thereof as an essential component as the composition that forms the adhesive layer in the present invention from the viewpoint of productivity, an environmental influence, and easiness to obtain a thick adhesive layer.

The content of the acrylic copolymer in the adhesive layer in the present invention is not particularly limited. From the viewpoint of the adhesion reliability, the content is preferably not less than 33% by weight (for example, 33 to 91% by weight), and more preferably not less than 40% by weight (for example, 40 to 87% by weight) based on the total amount (the total weight, 100% by weight) of the adhesive layer in the present invention. For example, in the case where the adhesive layer in the present invention is formed with the composition containing the monomer mixture or a partially polymerized product thereof as an essential component, the proportion of the monomer mixture or a partially polymerized product thereof is not particularly limited, but is preferably not less than 33% by weight (for example, 33 to 91% by weight), and more preferably not less than 40% by weight (for example, 40 to 87% by weight) based on the total amount (100% by weight) of the composition.

The adhesive layer in the present invention contains at least an acrylic copolymer. The acrylic copolymer contains the monomer mixture as the constituent. Namely, the acrylic copolymer may contain the monomers (a1), (a2), and (a3) as the constitution monomer component.

The monomer (a1) is an alkyl (meth)acrylate monomer having an alkyl group having 4 to 12 carbon atoms, and having a glass transition temperature less than 0°C when the monomer is formed into a homopolymer. The monomer (a1) is the so-called monofunctional monomer.

Examples of the monomer (a1) include Table 1 below. In the monomer mixture, the monomer (a1) may be contained alone, or two or more thereof may be contained in combination.

[Table 1]

Table 1

| (a1) | Glass transition temperature [°C] when monomer is formed into homopolymer |
|---|---|
| n-Butyl acrylate | -54 |
| sec-Butyl acrylate | -22 |
| 1,3-Dimethylbutyl acrylate | -15 |
| 2-Ethylbutyl acrylate | -50 |
| 2-Ethylhexyl acrylate | -50 |
| 2-Ethylhexyl methacrylate | -10 |
| n-Octyl acrylate | -65 |

(continued)

| (a1) | Glass transition temperature [°C] when monomer is formed into homopolymer |
|---|---|
| n-Octyl methacrylate | -20 |
| n-Nonyl acrylate | -58 |
| Lauryl acrylate | -3 |
| Lauryl methacrylate | -65 |

Among these, the monomer (a1) is more preferably an alkyl (meth)acrylate monomer having an alkyl group having 4 to 12 carbon atoms and having a glass transition temperature less than -20°C when the monomer is formed into a homopolymer, and still more preferably an alkyl (meth)acrylate monomer having an alkyl group having 4 to 12 carbon atoms and having a glass transition temperature less than -40°C when the monomer is formed into a homopolymer.
Specifically, the monomer (a1) is preferably n-butyl acrylate, sec-butyl acrylate, 2-ethylbutyl acrylate, 2-ethylhexyl acrylate, n-octyl acrylate, n-octyl methacrylate, n-nonyl acrylate, lauryl acrylate, and lauryl methacrylate, and more preferably n-butyl acrylate, 2-ethylhexyl acrylate, and lauryl acrylate.
The content of the monomer (a1) based on the total amount (the total weight, 100% by weight) of the monomer components that form the acrylic copolymer contained in the adhesive layer in the present invention is not particularly limited. The monomer (1a) is the main monomer component, and the content is preferably not less than 30% by weight, more preferably not less than 40% by weight, and still more preferably not less than 50% by weight.
Because the monomer (a1) is a main monomer component in the monomer mixture, the content of the monomer (a1) in the total amount (100% by weight) of the monomers (a1), (a2), and (a3) is 40 to 90% by weight, preferably 50 to 87% by weight, and more preferably 60 to 80% by weight. At a content of the monomer (a1) less than 40% by weight, some defects may occur, for example, adhesive properties such as initial application properties (initial adhesive force) under an environment, at normal temperature (23 ± 2°C) or a low temperature (for example, -40 to -10°C) may not be sufficiently demonstrated in the adhesive layer comprised of the adhesive composition. On the other hand, at a content more than 90% by weight, insufficient amounts of the monomers (a2) and (a3) may lead to an insufficient adhesive force, repulsion resistance, cohesion properties, and the like.
The monomer (a2) is a monomer having at least one nitrogen atom and one ethylenically unsaturated bond within the molecule. The monomer (a2) is a monomer having at least one nitrogen atom within the molecule, and may have one nitrogen atom or two or more nitrogen atoms. Moreover, because the monomer (a2) has one ethylenically unsaturated bond within the molecule, the monomer (a2) is a monofunctional monomer. The monomer (a2) is a component copolymerizable with the monomer (a1). In the monomer mixture, the monomer (a2) may be contained alone, or two or more thereof may be contained in combination. In the present invention, by use of the monomer (a2), a proper degree of polarity can be given to the acrylic copolymer. This can provide a pressure-sensitive adhesive sheet that keeps a high adhesive force and adhesion reliability (particularly, repulsion resistance and holding power) when the sheet is bonded, and can be easily peeled off from an adherend when the sheet is peeled.
The monomer (a2) is not particularly limited, and at least one monomer selected from the group consisting of N-vinyl cyclic amides and (meth)acrylamides is preferred.
Examples of N-vinyl cyclic amides include compounds represented by the following formula (1):

[Formula 1]

$$CH_2{=}CHNCOR^1 \qquad (1)$$

(wherein $R^1$ is a divalent organic group.)
In the formula (1), $R^1$ is preferably a saturated hydrocarbon group, and more preferably an alkylene group having 3 to 5 carbon atoms or the like.
Examples of the N-vinyl cyclic amides include N-vinyl-2-pyrrolidone, N-vinyl-2-piperidone, N-vinyl-3-morpholinone, N-vinyl-2-caprolactam, N-vinyl-1,3-oxazine-2-one, N-vinyl-3,5-morpholinedione, N-vinylpyridine, N-vinylpyrimidine, N-vinylpiperazine, and N-vinyl pyrrole.
Examples of the (meth)acrylamides include (meth)acrylamide, N-alkyl (meth)acrylamide, and N,N-dialkyl (meth) acrylamide. Examples of the N-alkyl (meth)acrylamide include N-ethyl (meth)acrylamide, N-n-butyl (meth)acrylamide, and N-octyl acrylamide. Further, examples thereof include amino group-containing (meth)acrylamides such as dimethylaminoethyl (meth)acrylamide and diethylaminoethyl (meth)acrylamide. Next, examples of the N,N-dialkyl (meth)acrylamide include N,N-dimethyl (meth)acrylamide, N,N-diethyl (meth)acrylamide, N,N-dipropyl (meth)acrylamide, N,N-diisopropyl (meth)acrylamide, N,N-di(n-butyl) (meth)acrylamide, and N,N-di(t-butyl) (meth)acrylamide.

Further, examples of the (meth)acrylamides also include cyclic (meth)acrylamides having an N-acryloyl group such as (meth)acryloyl morpholine, (meth)acryloyl pyrrolidone, and (meth)acryloyl pyrrolidine.

Further, examples of the (meth)acrylamides include N-hydroxylalkyl (meth)acrylamide monomers having a hydroxyalkyl group having 1 to 4 carbon atoms. Examples of the N-hydroxylalkyl (meth)acrylamide monomers having a hydroxyalkyl group having 1 to 4 carbon atoms include compounds represented by the following formula (2).

[Formula 2] $CH_2=C(R^2)CONR^3R^4$ (2)

(wherein $R^2$ represents a hydrogen atom or a methyl group, $R^3$ represents a hydroxyalkyl group having 1 to 4 carbon atoms, and $R^4$ represents a hydrogen atom or a saturated hydrocarbon group having 1 to 10 carbon atoms.)

In the formula (2), $R^3$ may have a linear chain structure, or may have a branched chain structure.

Examples of the N-hydroxylalkyl (meth)acrylamide monomers having a hydroxyalkyl group having 1 to 4 carbon atoms include N-methylol (meth)acrylamide, N-(2-hydroxyethyl)acrylamide, N-(2-hydroxyethyl)methacrylamide, N-(2-hydroxypropyl)acrylamide, N-(2-hydroxypropyl)methacrylamide, N-(1-hydroxypropyl)acrylamide, N-(1-hydroxypropyl) methacrylamide, N-(3-hydroxypropyl)acrylamide, N-(3-hydroxypropyl)methacrylamide, N-(2-hydroxybutyl)acrylamide, N-(2-hydroxybutyl)methacrylamide, N-(3-hydroxybutyl)acrylamide, N-(3-hydroxybutyl)methacrylamide, N-(4-hydroxybutyl)acrylamide, N-(4-hydroxybutyl)methacrylamide, and N-methyl-N-2-hydroxyethyl(meth)acrylamide.

Further, examples of the monomer (a2) other than the N-vinyl cyclic amides and the (meth)acrylamides include monomers having an amino group such as aminoethyl (meth)acrylate, N,N-dimethylaminoethyl (meth)acrylate, and N, N-dimethylaminopropyl (meth)acrylate; monomers having a maleimide skeleton such as N-cyclohexylmaleimide and N-phenylmaleimide; itaconimide monomers such as N-methylitaconimide, N-ethylitaconimide, N-butylitaconimide, N-2-ethylhexylitaconimide, N-laurylitaconimide, and N-cyclohexylitaconimide; cyanoacrylate monomers such as acrylonitrile and methacrylonitrile; and succinimide monomers such as N-(meth)acryloyloxymethylenesuccinimide, N-(meth)acryloyl-6-oxyhexamethylenesuccinimide, and N-(meth)acryloyl-8-oxyoctamethylenesuccinimide.

As the monomer (a2), preferred are N-vinyl-2-pyrrolidone and N-vinyl-2-caprolactam; (meth)acrylamides having one or two N-alkyl groups having 1 to 4 (more preferably 1 or 2) carbon atoms (for example, N,N-dialkyl acrylamides such as N,N-diethyl acrylamide, and N,N-dimethylacrylamide); and N-(2-hydroxyethyl)acrylamide, N-(2-hydroxyethyl) methacrylamide, N-methylol(meth)acrylamide, and N-(3-hydroxypropyl)acrylamide from the viewpoint of a balance between adhesion reliability and flexibility of the adhesive layer (adhesive layer in the present invention) comprised of the adhesive composition in the present invention. Particularly, as the monomer (a2), preferred are N,N-dimethylacrylamide, N-vinyl-2-pyrrolidone, and N-vinyl-2-caprolactam.

In the monomer mixture, the content of the monomer (a2) in the total amount (100% by weight) of the monomers (a1), (a2), and (a3) is 5 to 40% by weight, preferably 10 to 40% by weight, and more preferably 15 to 30% by weight. If the content of the monomer (a2) is controlled within the range, a high adhesive force and adhesion reliability (particularly, repulsion resistance and holding power) are maintained when the sheet is bonded, and the sheet can be easily peeled off from the adherend when the sheet is peeled. On the other hand, at a content less than 5% by weight, some defects may occur, for example, processability may be reduced or adhesion reliability is difficult to demonstrate in the adhesive layer comprised of the adhesive composition and the pressure-sensitive adhesive sheet having the adhesive layer. On the other hand, at a content more than 40% by weight, some defects may occur, for example, flexibility may be reduced or tackiness may be reduced in the adhesive layer comprised of the adhesive composition and pressure-sensitive adhesive sheet having the adhesive layer. Reduction in the flexibility may lead to reduction in the adhesion reliability (particularly, repulsion resistance).

The monomer (a3) is a monomer having one ethylenically unsaturated bond within the molecule, and having a glass transition temperature of not less than 0°C when the monomer is formed into a homopolymer. The monomer (a3) does not include the monomer (a2). The monomer (a3) has one ethylenically unsaturated bond within the molecule, and is a monofunctional monomer. In the monomer mixture, the monomer (a3) may be contained alone, or two or more thereof may be contained in combination.

In the monomer mixture, examples of the monomer (a3) include those shown in Table 2 below. In the monomer mixture, the monomer (a3) may be contained alone, or two or more thereof may be contained in combination.

[Table 2]

Table 2

| (a3) | Glass transition temperature [°C] when monomer is formed into homopolymer |
|---|---|
| tert-Butyl acrylate | 43 |
| tert-Butyl methacrylate | 118 |
| Cyclohexyl acrylate | 19 |
| Cyclohexyl methacrylate | 83 |
| Isobornyl acrylate | 94 |
| Isobornyl methacrylate | 110 |
| Furfuryl acrylate | 48 |
| Dicyclopentanyl acrylate | 120 |
| 1,4-Cyclohexanedimethanol monoacrylate | 9.8 |
| Dicyclopentenyloxyethyl acrylate | 10-15 |

Among these, the monomer (a3) is more preferably a monomer having one ethylenically unsaturated bond within the molecule and having a glass transition temperature not less than 10°C when the monomer is formed into a homopolymer ((a2) is excluded), and still more preferably a monomer having one ethylenically unsaturated bond within the molecule and having a glass transition temperature not less than 15°C when the monomer is formed into a homopolymer ((a2) is excluded).

Moreover, the monomer (a3) is preferably "(meth)acrylate monomers having a glass transition temperature of not less than 0°C when the monomer is formed into a homopolymer and having a structure in which a (meth)acryloyloxy group is bonded to a tertiary carbon atom," and "(meth)acrylate monomers having a glass transition temperature of not less than 0°C when the monomer is formed into a homopolymer and having a structure in which a (meth)acryloyloxy group is bonded to a carbon atom that constitutes a ring of a monocyclic or polycyclic alicyclic hydrocarbon" because those do not have a structure that causes an interaction with the adherend (for example, an acidic group) within the molecule, and adjust elasticity and flexibility of the adhesive layer comprised of the adhesive composition.

Specifically, as the monomer (a3), tert-butyl acrylate, tert-butyl methacrylate, cyclohexyl acrylate, cyclohexyl methacrylate, isobornyl acrylate, isobornyl methacrylate, dicyclopentanyl acrylate, dicyclopentanyl methacrylate, furfuryl acrylate, 1,4-cyclohexanedimethanol monoacrylate, and 1,4-cyclohexanedimethanol monomethacrylate can be used. In the present invention, preferable are tert-butyl acrylate, cyclohexyl acrylate, isobornyl acrylate, dicyclopentanyl acrylate, and 1,4-cyclohexanedimethanol monoacrylate, and particularly preferable are tert-butyl acrylate, isobornyl acrylate, and dicyclopentanyl acrylate.

In the monomer mixture, the content of the monomer (a3) in the total amount (100% by weight) of the monomers (a1), (a2), and (a3) is 0 to 40% by weight, preferably 3 to 30% by weight, and more preferably 5 to 20% by weight. If the monomer (a3) is contained in the monomer mixture, the adhesive force to the adherend can be improved in the adhesive layer comprised of the adhesive composition and the pressure-sensitive adhesive sheet having the adhesive layer. On the other hand, at a content of the monomer (a3) more than 40% by weight, some defects may occur, for example, the flexibility may be reduced or the tackiness may be reduced in the adhesive layer comprised of the adhesive composition and the pressure-sensitive adhesive sheet having the adhesive layer. Reduction in the flexibility may lead to reduction in the adhesion reliability (particularly, repulsion resistance).

The monomer mixture may contain a copolymerizable monomer (a4) together with the monomers (a1), (a2), and (a3) in the range in which the effect of the pressure-sensitive adhesive sheet according to the present invention is not impaired. The monomer (a4) does not include the monomers (a1), (a2), and (a3) and a polyfunctional monomer described later. The monomer (a4) is a monofunctional monomer having one ethylenically unsaturated bond within the molecule. In the monomer mixture, the monomer (a4) may be contained alone, or two or more thereof may be contained in combination. The content of the monomer (a4) in the monomer mixture is not particularly limited, and is preferably selected in the range in which the effect of the present invention is not impaired.

In the present invention, from the viewpoint of obtaining an adhesive layer that can demonstrate the adhesive force and adhesion reliability when the sheet is bonded (particularly, repulsion resistance and holding properties) and peelability and disassociation property when the sheet is peeled off from the adherend at a high level, in the monomer mixture, preferably, the content of the monomer (a1) is 40 to 90% by weight, the content of the monomer (a2) is 5 to

40% by weight, and the content of the monomer (a3) is 3 to 30% by weight in the total amount (100% by weight) of the monomers (a1), (a2), and (a3).

The monomer mixture may be used as a partially polymerized product obtained by partially polymerizing the monomer mixture. The partially polymerized product refers to a composition in which among the monomer components contained in the monomer mixture, one or two or more monomer components are partially polymerized. The partially polymerized product of the monomer mixture may be a syrupy form having viscosity depending on the polymerization rate.

The partially polymerized product of the monomer mixture is obtained by partially polymerizing the monomer components contained in the monomer mixture. For example, the partially polymerized product of the monomer mixture is obtained by avoiding contact with oxygen and irradiating the monomer mixture with an active energy ray (particularly, ultraviolet rays).

The polymerization rate of the partially polymerized product of the monomer mixture is not particularly limited. From the viewpoint of viscosity that is easy to handle the composition that forms the adhesive layer in the present invention and suitable for coating, the polymerization rate is preferably 2 to 40% by weight, and more preferably 5 to 20% by weight.

The polymerization rate of the partially polymerized product is determined as follows. Part of the partially polymerized product is sampled to obtain a sample. The sample is precisely weighed and the weight is determined. The weight is defined as a "weight of partially polymerized product before drying." Next, the sample is dried at 130°C for 2 hours. The sample after drying is precisely weighed and the weight is determined. The weight is defined as a "weight of partially polymerized product after drying." Then, the weight of the sample reduced by drying at 130°C for 2 hours is determined from the "weight of partially polymerized product before drying" and the "weight of partially polymerized product after drying," and defined as a "reduced weight amount" (volatile content, non-reacted monomer weight).
From the obtained "weight of partially polymerized product before drying" and "reduced weight amount," the polymerization rate of partially polymerized product (% by weight) is determined by the following equation:

$$\text{polymerization rate of partially polymerized product (\% by weight)} = [1 - (\text{reduced weight amount})/(\text{weight of partially polymerized product before drying})] \times 100$$

The adhesive composition in the present invention contains at least a thermally expandable micro particle in addition to the acrylic copolymer containing the monomer mixture as the constituent. For example, the composition that forms the adhesive layer in the present invention may contain at least a thermally expandable micro particle in addition to the monomer mixture or a partially polymerized product thereof. The thermally expandable micro particle refers to a fine particle whose volume expands by heat. In the adhesive composition in the present invention, one thermally expandable micro particle may be contained alone, or two or more thereof may be contained in combination.

The thermally expandable micro particle is not particularly limited, and a microencapsulated thermally expandable micro particle is preferred. Examples of such a microencapsulated thermally expandable micro particle include microspheres in which a substance that easily gasifies and expands by heating such as isobutane, propane, and pentane is enclosed in an elastic shell (referred to as a "thermally expandable microspheres" in some cases).

The shell of the thermally expandable microsphere is preferably formed with a thermoplastic substance, a heat-melting substance, a substance that ruptures by thermal expansion, or the like. Moreover, examples of a substance that forms the shell of the thermally expandable microsphere include vinylidene chloride-acrylonitrile copolymers, polyvinyl alcohols, polyvinyl butyral, polymethyl methacrylate, polyacrylonitrile, polyvinylidene chloride, and polysulfone. The thermally expandable microsphere is produced by a standard method such as a coacervation method and an interfacial polymerization method.

Moreover, a commercially available product may be used as the thermally expandable microsphere. The commercially available product of the thermally expandable microsphere is not particularly limited. Examples thereof include trade names "Matsumoto Microsphere F-30," "Matsumoto Microsphere F-50," "Matsumoto Microsphere F-80S," and "Matsumoto Microsphere F-85" (made by Matsumoto Yushi-Seiyaku Co., Ltd.); and a trade name "EXPANCEL Du series" (made by Eka Chemials AB Expancel). Among these, the trade name "EXPANCEL 051 Du40"(made by Eka Chemials AB Expancel) is more preferred.

The average particle size of the thermally expandable micro particle (particularly, thermally expandable microsphere) is not particularly limited. From the viewpoint of dispersibility and thin layer formability, the average particle size is preferably 1 to 80 $\mu$m, and more preferably 3 to 50 $\mu$m.

Further, the thermally expandable micro particle (particularly, thermally expandable microsphere) preferably has strength such that the thermally expandable micro particle does not rupture until the volumetric expansion coefficient

reaches 5 times or more, and particularly 10 times or more from the viewpoint of efficiently reducing the adhesive force by the heat treatment in the adhesive layer comprised of the adhesive composition in the present invention. In the case where a thermally expandable micro particle that ruptures at a low volumetric expansion coefficient (for example, a thermally expandable micro particle that ruptures at a volumetric expansion coefficient less than 5 times) or a non-microencapsulated thermally expanding agent (thermally foaming agent) is used, even if the adhesive layer comprised of the adhesive composition is subjected to the heat treatment, the contact area between the adhesive layer and the adherend cannot be sufficiently reduced, and good peelability is difficult to obtain. The volumetric thermal expansion coefficient is determined by the following equation:

volumetric expansion coefficient = (volume of thermally expandable microsphere after heating)/(volume of thermally expandable microsphere before heating)

In the adhesive composition in the present invention, the content of the thermally expandable micro particle (particularly, thermally expandable microsphere) depends on the kind, and is not particularly limited. The content is preferably 5 to 200 parts by weight, more preferably 10 to 125 parts by weight, still more preferably 15 to 100 parts by weight, and particularly preferably 20 to 80 parts by weight based on 100 parts by weight of the acrylic copolymer. At a content of the thermally expandable micro particle less than 5 parts by weight, the contact area between the adhesive layer and the adherend is likely to be reduced insufficiently by the heat treatment in the adhesive layer comprised of the adhesive composition. At a content more than 200 parts by weight, the cohesive failure of the adhesive layer comprised of the adhesive composition is likely to occur.

In the pressure-sensitive adhesive sheet according to the present invention, the monomer mixture is almost 100% converted to the acrylic copolymer (namely, the polymerization rate is 100%). Accordingly, 100 parts by weight of the monomer mixture corresponds to 100 parts by weight of the acrylic copolymer in the adhesive layer. Accordingly, for example, in the case where the adhesive layer in the present invention is formed with the composition comprising the monomer mixture or a partially polymerized product thereof as an essential component, the content of the thermally expandable micro particle(particularly, the thermally expandable microsphere) is preferably 5 to 200 parts by weight, more preferably 10 to 125 parts by weight, still preferably 15 to 100 parts by weight, and particularly preferably 20 to 80 parts by weight based on 100 parts by weight of the monomer mixture.

Further, the composition that forms the adhesive layer in the present invention may contain a polymerization initiator such as a thermal polymerization initiator and a photopolymerization initiator. For example, the composition that forms the adhesive layer in the present invention may contain a polymerization initiator besides the monomer mixture or a partially polymerized product thereof and the thermally expandable micro particle. If the composition that forms the adhesive layer in the present invention contains the polymerization initiator such as a thermal polymerization initiator and a photopolymerization initiator, a curing reaction by heat or an active energy ray can be used in forming the adhesive layer with the composition. For this reason, the composition can be cured in a form in which the thermally expandable micro particle is mixed, and the adhesive layer is obtained. Namely, such a composition can easily provide an adhesive layer having a structure in which the thermally expandable micro particle is stably contained. Particularly, the composition that forms the adhesive layer in the present invention preferably contains a photopolymerization initiator as described later. Using a polymerization reaction (photocuring reaction) using an active energy ray, such a composition can provide an adhesive layer having a structure in which the thermally expandable micro particle is stably contained. The polymerization initiator may be contained alone, or two or more thereof may be contained in combination.

Particularly, because the curing time when the adhesive layer is formed with the composition that forms the adhesive layer can be shortened, a photopolymerization initiator is preferred as the polymerization initiator.

The photopolymerization initiator is not particularly limited, and examples thereof include benzoin ether type photopolymerization initiators, acetophenone type photopolymerization initiators, $\alpha$-ketol type photopolymerization initiators, aromatic sulfonyl chloride type photopolymerization initiators, photoactive oxime type photopolymerization initiators, benzoin type photopolymerization initiators, benzyl type photopolymerization initiators, benzophenone type photopolymerization initiators, ketal type photopolymerization initiators, and thioxanthone type photopolymerization initiators.

Specifically, examples of the ketal photopolymerization initiators include 2,2-dimethoxy-1,2-diphenylethane-1-one (a trade name "IRGACURE 651," made by BASF Japan Ltd.). Examples of the $\alpha$-hydroxyketone type photopolymerization initiators include 1-hydroxycyclohexyl-phenylketone (a trade name "IRGACURE 184," made by BASF Japan Ltd.), 2-hydroxy-2-methyl-1-phenylpropane-1-one (a trade name "Darocur 1173," made by BASF Japan Ltd.), and 1-[4-(2-hydroxyethoxy)-phenyl]-2-hydroxy-2-methyl-1-propane-1-one (a trade name "IRGACURE 2959," made by BASF Japan Ltd.). Examples of the $\alpha$-aminoketone type photopolymerization initiators include 2-methyl-1[4-(methylthio)phenyl]-2-morpholinopropane-1-one (a trade name "IRGACURE 907," made by BASF Japan Ltd.), and 2-benzyl-2-dimethylamino-1-(4-morpholinophenyl)-butanone-1 (a trade name "IRGACURE 369," made by BASF Japan Ltd.). Examples of acylphosphine oxide type photopolymerization initiators include 2,4,6-trimethylbenzoyldiphenylphosphine oxide (a trade name "Lucirin TPO," made by BASF Japan Ltd.). Examples of the benzoin ether type photopolymerization initiators include benzoin methyl ether, benzoin ethyl ether, benzoin propyl ether, benzoin isopropyl ether, benzoin isobutyl ether, 2,2-dimethoxy-1,2-diphenylethane-1-one, and anisole methyl ether. Examples of the acetophenone type photopolymerization initiators include 2,2-diethoxyacetophenone, 2,2-dimethoxy-2-phenylacetophenone, 1-hydroxycyclohexylphenylketone, 4-phenoxydichloroacetophenone, and 4-t-butyl-dichloroacetophenone. Examples of the aromatic sulfonyl chloride type photopolymerization initiators include 2-naphthalenesulfonylchloride. Examples of the photoactive oxime type photopolymerization initiators include 1-phenyl-1,1-propanedione-2-(o-ethoxycarbonyl)-oxime. Examples of the benzoin type photopolymerization initiators include benzoin. Examples of the benzyl type photopolymerization initiators include benzyl. Examples of the benzophenone type photopolymerization initiators include benzophenone, benzoylbenzoic acid, 3,3'-dimethyl-4-methoxybenzophenone, polyvinylbenzophenone, and $\alpha$-hydroxycyclohexylphenylketone. Examples of the ketal type photopolymerization initiators include benzyl dimethyl ketal. Examples of the thioxanthone type photopolymerization initiators include thioxanthone, 2-chlorothioxanthone, 2-methylthioxanthone, 2,4-dimethylthioxanthone, isopropylthioxanthone, 2,4-dichlorothioxanthone, 2,4-diethylthioxanthone, and 2,4-diisopropylthioxanthone, dodecylthioxanthone.

In the present invention, the content of the polymerization initiator depends on the kind thereof, and is not particularly limited. In the case of the photopolymerization initiator, the content is preferably 0.001 to 5 parts by weight, more preferably 0.01 to 5 parts by weight, and still more preferably 0.05 to 3 parts by weight based on 100 parts by weight of the monomer mixture. At a content of the photopolymerization initiator less than 0.001 parts by weight, the time needed for the polymerization reaction may be increased. On the other hand, at a content more than 5 parts by weight, the molecular weight of the acrylic copolymer may be reduced in the adhesive layer, leading to uneven adhesive properties.

Further, the composition that forms the adhesive layer in the present invention preferably contains a monomer having two or more ethylenically unsaturated bonds within the molecule from the viewpoint of adjusting the elasticity and flexibility of the adhesive layer, and increasing a cohesive force in the adhesive layer to improve the adhesive force. Moreover, the monomer having two or more ethylenically unsaturated bonds within the molecule is preferably contained from the viewpoint of foaming properties of the adhesive layer. Herein, the "monomer having two or more ethylenically unsaturated bonds within the molecule" may be referred to as a "polyfunctional monomer" in some cases.

The polyfunctional monomer is not included in the monomer (a2) and the monomer (a3).

The polyfunctional monomer is preferably a monomer having two or more ethylenically unsaturated bonds within the molecule in which at least one ethylenically unsaturated bond is an ethylenically unsaturated bond in a (meth) acryloyl group. Herein, the "monomer having two or more ethylenically unsaturated bonds within the molecule in which at least one ethylenically unsaturated bond is an ethylenically unsaturated bond in a (meth)acryloyl group" may be referred to as a "polyfunctional (meth)acrylate" in some cases. In the polyfunctional (meth)acrylate, all the ethylenically unsaturated bonds within the molecule may be the ethylenically unsaturated bond in the (meth)acryloyl group.

Examples of the polyfunctional (meth)acrylate include trimethylolpropane tri(meth)acrylate, tetramethylolmethane tetra(meth)acrylate, pentaerythritol di(meth)acrylate, pentaerythritol tri(meth)acrylate, pentaerythritol tetra(meth) acrylate, 1,2-ethylene glycol di(meth)acrylate, 1,4-butyleneglycol di(meth)acrylate, 1,6-hexanediol di(meth)acrylate, 1,12-dodecanediol di(meth)acrylate, dipentaerythritolmonohydroxy penta(meth)acrylate, dipentaerythritol hexa(meth) acrylate, polyethylene glycol di(meth)acrylate, hexanediol di(meth)acrylate, (poly)ethylene glycol di(meth)acrylate, (poly) propyleneglycol di(meth)acrylate, neopentylglycol di(meth)acrylate, tetramethylolmethane tri(meth)acrylate, allyl(meth) acrylate, vinyl (meth)acrylate, epoxy acrylate, polyester acrylate, urethane acrylate, and reactive hyperbranched polymers having in the terminal several (meth)acryloyl groups (for example, trade names "CN2300," "CN2301," and "CN2320," made by Sartomer USA, LLC).

In the composition that forms the adhesive layer in the present invention, the content of the polyfunctional monomer is not particularly limited. Specifically, for example, in the case where the composition that forms the adhesive layer in the present invention is a composition containing at least the monomer mixture or a partially polymerized product thereof and containing the polyfunctional (meth)acrylate, the content is preferably not more than 5 parts by weight (for example, 0.001 to 5 parts by weight), more preferably not more than 3 parts by weight (for example, 0.001 to 3 parts by weight), and still more preferably not more than 1 part by weight (for example, 0.001 to 1 part by weight) based on 100 parts by weight of the monomer mixture. If the content of the polyfunctional (meth)acrylate is excessively large (for example, more than 5 parts by weight), the flexibility of the adhesive layer may be impaired, and particularly the repulsion resistance of the adhesive layer may be affected. If the content of the polyfunctional (meth)acrylate is excessively small, a sufficient cohesive force is not obtained in the adhesive layer, and the adhesion reliability of the adhesive layer may be affected.

In the composition that forms the adhesive layer in the present invention, preferably, the polyfunctional monomer

(particularly, polyfunctional (meth)acrylate) is properly adjusted and contained such that the solvent-insoluble content (gel fraction) of the adhesive layer (thermally expandable micro particle containing adhesive layer, adhesive layer in the present invention) described later is a desired solvent-insoluble content.

Further, when necessary, the adhesive layer in the present invention may contain additives in the range such that the effect of the present invention is not impaired. Namely, when necessary, the composition that forms the adhesive layer in the present invention may contain additives in the range such that the effect of the present invention is not impaired. Examples of the additives include a crosslinking agent such as isocyanate type crosslinking agents and epoxy type crosslinking agents; a tactifier such as rosin derivative resins, polyterpene resins, petroleum resins, and oil-soluble phenol resins; a plasticizer; a filler; an antioxidant; and a surface active agent. The adhesive composition in the present invention may contain two or more additives.

For handling, the composition that forms the adhesive layer in the present invention may be adjusted so as to have a viscosity suitable for coating (usually, 0.3 to 40 Pa·s as a viscosity measured on the condition of the measurement temperature: 25°C in the measurement of viscosity by a B type viscometer).

The composition that forms the adhesive layer in the present invention preferably contains the partially polymerized product of the monomer mixture from the viewpoint of obtaining the viscosity. A thickening polymer may be also blended.

A method for producing the composition that forms the adhesive layer in the present invention is not particularly limited. Examples thereof include a method in which thermally expandable micro particle and the component added when necessary (for example, the photopolymerization initiator, the polyfunctional monomer such as the polyfunctional (meth)acrylate, additives, and the like) are blended with the monomer mixture or a partially polymerized product thereof.

In the adhesive composition in the present invention contains, the monomer mixture contained as the constituent of the acrylic copolymer contains the monomer (a2) as the monomer component. Accordingly, the adhesive composition in the present invention can comprise an adhesive layer in which a high adhesive force and adhesion reliability (particularly, repulsion resistance) are maintained when the sheet is bonded, and the sheet can be easily peeled off from the adherend when the sheet is peeled, and the bonded portion can be easily separated and disassociated. Moreover, the adhesive composition in the present invention can comprise an adhesive layer having high adhesive properties. This is because the monomer (a2) contributes improvement in the adhesive force and cohesive force of the adhesive layer.

For this reason, the adhesive composition in the present invention can comprise an adhesive layer that demonstrates a good adhesive force to the adherend, and can be peeled off from the adherend by heating even if the monomer mixture contained as the constituent of the acrylic copolymer does not substantially contain any acidic group-containing monomer (for example, a monomer containing a carboxyl group such as an acrylic acid; and a monomer containing an acidic group other than a carboxyl group (such as a sulfonate group and a phosphate group) such as a sulfonate group-containing monomer and a phosphate group-containing monomer) as the copolymerizable monomer (a1). The expression "does not substantially contain" means that the monomer mixture contains no acidic group-containing monomer or the content is not more than 0.1 parts by weight based on 100 parts by weight of the total amount of the monomer components.

Further, the adhesive composition in the present invention can comprise an adhesive layer in which the adhesive force to an adherend (particularly, a metallic adherend) is difficult to increase over time because the monomer mixture contained as the constituent of the acrylic copolymer contains the monomer (a2) having at least one nitrogen atom and one ethylenically unsaturated bond within the molecule as the monomer component. Further, the adhesive composition in the present invention can comprise an adhesive layer that is difficult to corrode an adherend (particularly, a metallic adherend). This is because the monomer (a2) has no structure in which an interaction with the adherend is caused (such as the acidic group) within the molecule. The "metallic adherend" means an adherend comprised of a metal as a material.

If an adhesive layer composed of the adhesive composition substantially containing the acidic group-containing monomer is applied to the metallic adherend, the adhesive force may be increased over time by an interaction with the adherend (for example, hydrogen bonding between the acid component and the metal), leading to difficulties in peeling off the sheet from the adherend or separating and disassociating the bonded portion. Moreover, the metallic adherend may be corroded by the acid component.

Further, the adhesive composition in the present invention can form an adhesive layer in which the adhesive force is more difficult to increase over time if the monomer mixture contained as the constituent of the acrylic copolymer contains the monomer (a3) in addition to the monomer (a2).

The adhesive composition in the present invention can comprise an adhesive layer in which a high adhesive force and adhesion reliability (particularly, repulsion resistance) are maintained when the sheet is bonded, and the sheet can be easily peeled off from the adherend when the sheet is peeled, and the bonded portion can be easily separated and disassociated, because the monomer mixture contained as the constituent of the acrylic copolymer contains the monomer (a3) together with the monomer (a2) as the monomer component. This is because the monomer (a3) is a component to enhance the effect of the monomer (a2).

The adhesive composition in the present invention contains the thermally expandable micro particle. For this

reason, if the adhesive layer formed with the adhesive composition in the present invention (adhesive layer in the present invention, thermally expandable micro particle containing adhesive layer) is applied to an adherend and heated, the contact area between the adhesive layer and the adherend is reduced accompanied by foaming of the thermally expandable micro particle caused by the heating. As a result, (i) properties such that the adhesive force is easily reduced (peelability, easy peelability) and (ii) disassociation property (separe property) of the bonded portion are demonstrated. Namely, the adhesive composition in the present invention can comprise an adhesive layer that can be easily peeled and disassociated by heating when the sheet is peeled. Herein, the properties (i) and (ii) may be collectively referred to as "peelability and disassociation property" in some cases.

In the adhesive composition, if instead of the monomer (a1), the monomer mixture contained as the constituent of the acrylic copolymer contains an alkyl (meth)acrylate monomer having an alkyl group having 4 to 12 carbon atoms and having a glass transition temperature more than 0°C when the monomer is formed into a homopolymer, the adhesive force and adhesion reliability of the adhesive layer comprised of the adhesive composition are reduced, and the peelability cannot be compatible with disassociation property.

Moreover, in the adhesive composition, if instead of the monomer (a1), the monomer mixture contained as the constituent of the acrylic copolymer contains an alkyl (meth)acrylate monomer having an alkyl group having 1 to 3 carbon atoms and having a glass transition temperature more than 0°C when the monomer is formed into a homopolymer or an alkyl (meth)acrylate monomer having an alkyl group more than 12 carbon atoms and having a glass transition temperature more than 0°C when the monomer is formed into a homopolymer, the adhesive force and adhesion reliability of the adhesive layer comprised of the adhesive composition are reduced, and the peelability cannot be compatible with disassociation property.

The adhesive layer (adhesive layer in the present invention) provided in the pressure-sensitive adhesive sheet according to the present invention is an adhesive layer comprised of the adhesive composition (thermally expandable micro particle-containing adhesive composition, adhesive composition in the present invention). Moreover, the adhesive layer in the present invention is an adhesive layer containing the thermally expandable micro particle (thermally expandable micro particle containing adhesive layer). The adhesive layer provided in the pressure-sensitive adhesive sheet according to the present invention contains a polymer formed with the monomer mixture or a partially polymerized product thereof as a base polymer.

The solvent-insoluble content (gel fraction) of the adhesive layer (adhesive layer in the present invention) provided in the pressure-sensitive adhesive sheet according to the present invention is not particularly limited, and is preferably 50 to 99% by weight, and more preferably 60 to 95% by weight. At a solvent-insoluble content less than 50% by weight, it may be difficult to peel off the adhesive layer from the adherend by foaming of thermally expandable micro particle. At a solvent-insoluble content more than 99% by weight, wettability of the adhesive layer may be reduced, leading to difficulties in bonding.

The solvent-insoluble content of the adhesive layer refers to a "proportion of a solvent-insoluble component" in the adhesive layer, and is a value calculated by a "method for measuring a solvent-insoluble content of an adhesive layer" below. The solvent-insoluble content of the adhesive layer also contains the thermally expandable micro particle insoluble in the solvent.

Method for measuring solvent-insoluble content of adhesive layer

Approximately 1 g of the adhesive layer is taken, and used as a sample. The sample is precisely weighed, and the weight is determined. The weight is defined as a "weight of adhesive layer before immersion." Next, the sample is immersed in 40 g of ethyl acetate for 7 days. Then, all the components insoluble in ethyl acetate (insoluble portion) are recovered, and the recovered insoluble portions all are dried at 130°C for 2 hours. Then, the weight is determined, and defined as a "dry weight of insoluble portion." Then, the obtained values are substituted into the following equation, and the calculation is performed.

$$\text{solvent-insoluble content of adhesive layer (\% by weight)} = [(\text{dry weight of insoluble portion})/(\text{weight of adhesive layer before immersion})] \times 100$$

The thickness of the adhesive layer (adhesive layer in the present invention) provided in the pressure-sensitive adhesive sheet according to the present invention is properly selected according to the purpose of use or reduction in the adhesive force by heating. In order to keep smoothness of the surface, the thickness is preferably equal to the largest particle size of the thermally expandable micro particle (particularly, the thermally expandable microsphere) or more

than that. From the viewpoint of obtaining good peelability and disassociation property in the adhesive layer in the present invention, the thickness of the adhesive layer in the present invention is preferably larger because the absolute amount of the thermally expandable micro particle in the adhesive layer is increased as the thickness of the adhesive layer is larger. However, if the thickness of the adhesive layer in the present invention is increased, the absolute amount of the thermally expandable micro particle in the adhesive layer is increased. As the result, the proportion of the adhesive component in the adhesive layer is decreased. For this reason, the adhesive force and adhesion reliability in the adhesive layer may be reduced.

Accordingly, the thickness of the adhesive layer (adhesive layer in the present invention) provided in the pressure-sensitive adhesive sheet according to the present invention is not particularly limited. From the viewpoint of compatibility between the adhesion reliability and peelability and the disassociation property in the adhesive layer, the thickness is preferably 1 to 500 μm, more preferably 10 to 300 μm, and still more preferably30 to 250 μm. The adhesive layer in the present invention may have a single layer structure, or a laminate structure.

More specifically, the adhesive layer (adhesive layer in the present invention) provided in the pressure-sensitive adhesive sheet according to the present invention is formed as follows: the composition that forms the adhesive layer in the present invention is applied onto a proper support such as a release film and a substrate to obtain a composition layer; next, the composition layer is dried or cured when necessary (for example, cured by heat or an active energy beam). In the case where curing by an active energy ray (photocuring) is used, preferably, oxygen is blocked, for example, by bonding a release film (separator) onto the composition layer or by photocuring under a nitrogen atmosphere because the photopolymerization reaction is inhibited by oxygen in the air.

Particularly, from the viewpoint of obtaining a structure in which the thermally expandable micro particle is stably contained, the adhesive layer (adhesive layer in the present invention) provided in the pressure-sensitive adhesive sheet according to the present invention is preferably formed with the composition (composition that forms the adhesive layer in the present invention) containing a polymerization initiator (polymerization initiator such as a photopolymerization initiator and a thermal polymerization initiator) using the curing reaction by heat or an active energy beam. Moreover, from the viewpoint of obtaining a thick adhesive layer, the adhesive layer in the present invention is preferably formed with the composition containing the photopolymerization initiator using the curing reaction by an active energy ray.

Because the adhesive layer (adhesive layer in the present invention) provided in the pressure-sensitive adhesive sheet according to the present invention contains the thermally expandable micro particle, the adhesive layer has properties such that the adhesive force is easily reduced by foaming of the thermally expandable micro particle by heating (easy peelability).

To the adherends formed with various materials, the adhesive layer (adhesive layer in the present invention) provided in the pressure-sensitive adhesive sheet according to the present invention keeps a high adhesive force and adhesion reliability (particularly, repulsion resistance) when the sheet is bonded, and demonstrates good peelability and disassociation property by heating when the sheet is peeled. The adhesive layer also has high adhesive properties.

Particularly to the metallic adherend, the adhesive layer (adhesive layer in the present invention) provided in the pressure-sensitive adhesive sheet according to the present invention also keeps a high adhesive force and adhesion reliability (particularly, repulsion resistance) when the sheet is bonded, and demonstrates good peelability and disassociation property by heating when the sheet is peeled. The adhesive layer also has high adhesive properties to the metallic adherend.

(Pressure-sensitive adhesive sheet)

The pressure-sensitive adhesive sheet according to the present invention has at least the adhesive layer (thermally expandable micro particle containing adhesive layer, adhesive layer in the present invention) on at least one surface of the heat-shrinkable film as the substrate. The pressure-sensitive adhesive sheet according to the present invention has the adhesive layer. Accordingly, the pressure-sensitive adhesive sheet according to the present invention has properties such that a high adhesive force and adhesion reliability (particularly, repulsion resistance and holding power) are kept when the sheet is bonded to the adherend, and the adhesive force (adhesive strength, bonding strength) is extremely reduced by foaming of the thermally expandable micro particle by heating and shrinkage of the subustrate when the sheet is peeled.

Particularly, the pressure-sensitive adhesive sheet according to the present invention also has properties such that the sheet has a high adhesive force to the metallic adherend, and the adhesive force is easily reduced by foaming of the thermally expandable micro particle by heating and shrinkage of the substrate when the sheet is peeled. The pressure-sensitive adhesive sheet according to the present invention also has high adhesive properties to the metallic adherend.

The pressure-sensitive adhesive sheet according to the present invention is a pressure-sensitive adhesive sheet for re-peeling. The pressure-sensitive adhesive sheet according to the present invention is also a heat foaming type re-peelable pressure-sensitive adhesive sheet.

The form of the pressure-sensitive adhesive sheet according to the present invention is not particularly limited. The pressure-sensitive adhesive sheet may have a form in which the sheet is wound into a roll, or a form in which the sheet is laminated. Namely, the pressure-sensitive adhesive sheet according to the present invention can have a sheet-like form, a film-like form, a tape-like form, or the like. Moreover, the pressure-sensitive adhesive sheet according to the present invention may be punched into a specific shape, or may be cut.

The pressure-sensitive adhesive sheet wound into a roll-like form may have a form such that the sheet is wound into a roll in the state where the adhesive surface is protected by a release film described later. In the case where the pressure-sensitive adhesive sheet wound into a roll-like form is a type having the substrate described later, the sheet may have a form such that the sheet is wound into a roll in the state where the sheet is protected by a release-treated layer formed on one surface side of the substrate (rear surface-treated layer). The release treating agent (releasing agent) used in forming the release-treated layer on the one surface side of the substrate is not particularly limited. Examples thereof include silicone type releasing agents and long-chain alkyl type releasing agents.

Moreover, the pressure-sensitive adhesive sheet according to the present invention may be a double-sided pressure-sensitive adhesive sheet having an adhesive surface on both surface sides of the pressure-sensitive adhesive sheet, or a single-sided pressure-sensitive adhesive sheet having an adhesive surface only on one surface side of the pressure-sensitive adhesive sheet. Preferably, the pressure-sensitive adhesive sheet according to the present invention is a double-sided pressure-sensitive adhesive sheet from the viewpoint of bonding two members thereto.

Moreover, the pressure-sensitive adhesive sheet according to the present invention may have a heat generating layer. If the pressure-sensitive adhesive sheet according to the present invention has a heat generating layer, heat can be generated in the heat generating layer when the sheet is peeled off from the adherend. Thereby, the thermally expandable micro particle can be foamed to reduce the adhesive force to the adherend.

In the case where the heat generating layer is provided in the pressure-sensitive adhesive sheet according to the present invention, the position of the heat generating layer in the entire pressure-sensitive adhesive sheet is not particularly limited as long as at least one surface of the pressure-sensitive adhesive sheet is a surface of the adhesive layer (thermally expandable micro particle containing adhesive layer, adhesive layer in the present invention).

The heat generating layer is not particularly limited, and is preferably a planar heat generating body. The planar heat generating body has at least a plate-like or sheet-like heat generating element that generates the heat by electrical conduction. Examples of the plate-like or sheet-like heat generating element include sheet-like materials such as metallic foils, metallic plates, sheet-like graphite carbon, sheet-like material containing carbon powder or metal powder or like. Moreover, the planar heat generating body may contain an electric insulating sheet that covers the plate-like or sheet-like heat generating element.

The thickness of the heat generating layer is not particularly limited, and is preferably 10 to 300 μm, and more preferably 10 to 150 μm.

Moreover, the pressure-sensitive adhesive sheet according to the present invention may contain other layers such as an intermediate layer, an undercoat layer, and an adhesive layer other than the adhesive layer (thermally expandable micro particle containing adhesive layer, adhesive layer in the present invention) in the range such that the effect of the present invention is not impaired.

Examples of the adhesive layer other than the adhesive layer (thermally expandable micro particle containing adhesive layer, adhesive layer in the present invention) include a non-thermally expandable-micro-particle-containing adhesive layer that is an adhesive layer containing no thermally expandable micro particle. The non-thermally expandable-micro-particle-containing adhesive layer is formed by a known method for forming an adhesive layer using a known adhesive (for example, acrylic adhesives, rubber type adhesives, vinyl alkyl ether type adhesives, silicone type adhesives, polyester type adhesives, polyamide type adhesives, urethane type adhesives, fluorine type adhesives, and epoxy type adhesives), for example. The thickness of the non-thermally expandable-micro-particle-containing adhesive layer is not particularly limited, and is properly selected depending on the purpose of use of the pressure-sensitive adhesive sheet or a method for use.

The thickness of the pressure-sensitive adhesive sheet according to the present invention is not particularly limited. In the case of the pressure-sensitive adhesive sheet having the adhesive layer on the one surface of the substrate, the thickness is preferably 11 to 1100 μm, and more preferably 30 to 500 μm. In the case of the pressure-sensitive adhesive sheet having the adhesive layer on both surfaces of the substrate, the thickness is preferably 15 to 1700 μm, and more preferably 50 to 1000 μm.

Further, in order to protect the adhesive surface, the pressure-sensitive adhesive sheet according to the present invention may be protected by a release film (separator) until the sheet is used. Moreover, a release film may be used in production of the pressure-sensitive adhesive sheet according to the present invention. The release film may not be always used in the production of the pressure-sensitive adhesive sheet according to the present invention. However, the photopolymerization reaction is inhibited by oxygen or the like in the air. In order to prevent contact with oxygen by covering the surface of the sheet with the release film, the release film is preferably used in the production. The release film is peeled off when the pressure-sensitive adhesive sheet according to the present invention is used.

The release film is not particularly limited, and examples thereof include substrates having at least one surface subjected to a release treatment (releasing treatment) with a release treating agent (release treating agent); low adhesive substrates formed with a fluorine-containing polymer (for example, polytetrafluoroethylene, polychlorotrifluoroethylene, polyvinyl fluoride, polyvinylidene fluoride, tetrafluoroethylene-hexafluoropropylene copolymers, chlorofluoroethylene-vinylidene fluoride copolymers); and low adhesive substrates formed with a non-polar polymer (for example, an olefin resin such as polyethylene and polypropylene). In the low adhesive substrate, both surfaces thereof are used as a release surface. On the other hand, in the release-treated substrate, the release-treated surface is used as the release surface. The release film is formed by a known or standard method.

Examples of the substrate used in the substrates having at least one surface subjected to a release treatment with a release treating agent include polyester films such as polyethylene terephthalate films; olefin resin films such as polyethylene films and polypropylene films; polyvinyl chloride films; polyimide films; polyamide films such as nylon films; and plastic base films such as rayon films (synthetic resin films). Examples of the substrate also include paper bases formed with fine quality paper, Japanese paper, kraft paper, glassine paper, synthetic paper, and top coated paper. Among these, preferred are polyester films such as polyethylene terephthalate films.

The release treating agent used in the substrates having at least one surface subjected to a release treatment with a release treating agent is not particularly limited, and examples thereof include silicone-based release treating agents, fluorine-based release treating agents, and long-chain alkyl-based release treating agents. The release treating agent is used alone, or two or more thereof are used in combination.

The thickness of the release film is not particularly limited. The release film may have any form such as a single layer and a laminate layer.

A method for producing the pressure-sensitive adhesive sheet according to the present invention is not particularly limited. The pressure-sensitive adhesive sheet according to the present invention may be produced by a known or standard method. For example, the composition that forms the adhesive layer in the present invention is applied onto at least one surface side of the heat-shrinkable film to obtain a composition layer. Then, the composition layer is cured to obtain the adhesive layer (adhesive layer in the present invention). Thus, the pressure-sensitive adhesive sheet according to the present invention is formed. Alternatively, the pressure-sensitive adhesive sheet according to the present invention may be formed as follows. The composition that forms the adhesive layer in the present invention is applied onto the release film to obtain a composition layer. Then, the composition layer is cured to obtain the adhesive layer (adhesive layer in the present invention), and the adhesive layer (adhesive layer in the present invention) is transferred onto at least one surface side of the heat-shrinkable film.

The coating method and coating tool used in applying the adhesive composition onto the release film or a substrate are not particularly limited. A coating method or a coating tool described later may be used.

A method for curing the composition that forms the adhesive layer in the present invention is not particularly limited. From the viewpoint of workability, energy savings, and obtaining a relatively thick adhesive layer, photocuring using an active energy ray is preferred. The active energy ray is not particularly limited as described above. Examples thereof include ionizing radiation such as $\alpha$ rays, $\beta$ rays, $\gamma$ rays, neutron beams, and electron beams and ultraviolet rays. Particularly preferred are ultraviolet rays. The irradiation energy and irradiation time of the active energy ray are not particularly limited as long as the monomer components may be reacted. Examples of the preferred form of irradiation with the active energy ray include irradiation with ultraviolet rays at a light amount of 400 to 4000 mJ/cm$^2$, the ultraviolet rays having an illuminance of 1 to 200 mW/cm$^2$ at a wavelength of 300 to 400 nm.

In the case where photocuring with the active energy ray is used as the curing method, a method for irradiating with the active energy ray may be properly selected from the viewpoint of adjusting the adhesive properties of the pressure-sensitive adhesive sheet according to the present invention such as the adhesive force. Specific examples of a method for adjusting the adhesive properties of the pressure-sensitive adhesive sheet such as the adhesive force using photocuring with an active energy ray as the curing method include the method disclosed in Japanese Patent Laid-Open No. 2003-13015. Japanese Patent Laid-Open No. 2003-13015 discloses a method for irradiating with an active energy ray in several steps to adjust tackiness more precisely. More specifically, examples of the method include: (i) a method in which in the case where ultraviolet rays are used as the active energy ray, a first step of performing irradiation with ultraviolet rays at a illuminance: not less than 30 mW/cm$^2$, and a second step of performing irradiation with light having a temperature lower than that in the first step to substantially complete the polymerization reaction are separately performed; and (ii) a method in which a first step of performing irradiation with ultraviolet rays at a illuminance: not less than 30 mW/cm$^2$, a second step of performing irradiation with light having an illuminance lower than that in the first step to obtain a polymerization rate of at least 70% by weight, and a third step of performing irradiation with light at an illuminance: not less than 30 mW/cm$^2$ to substantially complete the polymerization reaction are separately performed. The polymerization rate is calculated in the same manner as in the case of the polymerization rate of the partially polymerized product.

Examples of an apparatus for irradiating with ultraviolet rays used in the first step include low pressure mercury lamps, high pressure mercury lamps, ultra high pressure mercury lamps, and metal halide lamps. Examples of an

apparatus for irradiating with ultraviolet rays used in the second step include chemical lamps, and black light lamps.

Hereinafter, a preferred Production Example of a double-sided pressure-sensitive adhesive sheet having the adhesive layer on both surface sides of the heat-shrinkable film will be described with reference to the drawings when necessary. The method for producing the pressure-sensitive adhesive sheet according to the present invention is not limited to the Production Example. Hereinafter, the preferred Production Example of the pressure-sensitive adhesive sheet having the adhesive layer on both surface sides of the heat-shrinkable film may be referred to as "Production Example 1" in some cases.

Figures 1 to 3 respectively show a first step, a second step, and a third step in Production Example 1. Figure 4 shows the thermally expandable micro particle containing adhesive layer (adhesive layer in the present invention) obtained in Production Example 1. Figure 5 shows a fourth step in Production Example 1. Figure 6 shows the pressure-sensitive adhesive sheet obtained in Production Example 1. In Figures 1 to 6, the first step 1a in Production Example 1 is shown, the second step 1b in Production Example 1 is shown, the third step 1c in Production Example 1 is shown, and the fourth step 1d in Production Example 1 is shown. In Figures 1 to 6, a thermally expandable micro particle containing composition layer 11, a release film(separator) 12, a thermally expandable micro particle containing adhesive layer 13, an active energy ray 14, a heat-shrinkable film 15, and a pressure-sensitive adhesive sheet 16 are shown.

The first step in Production Example 1 is a step of applying a thermally expandable micro particle containing composition onto a release-treated surface of the release film 12 to form the thermally expandable micro particle containing composition layer 11 (see Figure 1). The thermally expandable micro particle containing composition is a composition that forms the thermally expandable micro particle containing adhesive layer (adhesive layer in the present invention). By this step, a sheet is obtained in which the thermally expandable micro particle containing composition layer 11 is formed on the release-treated surface of the release film 12.

The application method used in applying the thermally expandable micro particle containing composition onto the release-treated surface of the release film 12 in the first step in Production Example 1 is not particularly limited. Examples thereof include a slot die method, a reverse gravure coating method, a micro gravure method, a dipping method, a spin coating method, a brush coating method, a roll coating method, and a flexo printing method. When the thermally expandable micro particle containing composition is applied onto the release-treated surface of the release film 12, coating tools usually used are used without particular limitation. Examples of such coating tools include roll coaters such as a reverse coater and a gravure coater; a curtain coater; a lip coater; a die coater; and a knife coater.

The second step in Production Example 1 is a step of laminating the release-treated surface of the release film 12 to the thermally expandable micro particle containing composition layer 11 of the sheet produced in the first step (see Figure 2). By this step, a sheet having the release film 12 on both surface sides of the thermally expandable micro particle containing composition layer 11 (a sheet having a layer configuration of release film 12/thermally expandable micro particle containing composition layer 11/release film 12) is obtained.

In the second step in Production Example 1, contact with oxygen, which inhibits the photocuring reaction (photopolymerization reaction), is preferably suppressed in photocuring the composition that forms the adhesive layer. Accordingly, oxygen is blocked by the release film 12 laminated to both surfaces of the thermally expandable micro particle containing composition layer 11.

In Production Example 1, a method for suppressing contact with oxygen is not particularly limited. Besides the method for blocking oxygen using the release film, a method may be used in which an environment for irradiation with the active energy ray is under an inert gas (for example, nitrogen gas) atmosphere. Namely, in the second step in Production Example 1, instead of laminating the release film 12 to both surfaces of the thermally expandable micro particle containing composition layer 11, inhibition of the photopolymerization reaction by oxygen may be suppressed by using an inert gas (for example, nitrogen gas) to provide the environment for irradiation with the active energy ray under an inert gas atmosphere. In the case where the thermally expandable micro particle containing composition layer 11 is photocured under an inert gas atmosphere of nitrogen gas or the like using the active energy ray 14, the thermally expandable micro particle containing composition layer 11 does not need to be covered with the release film 12.

In the case where the method in which the environment for irradiation with the active energy ray is under an inert gas atmosphere is used as the method for preventing the contact with oxygen, preferably, oxygen does not exist as much as possible under the inert gas atmosphere. For example, the concentration of oxygen is preferably not more than 5000 ppm.

In the case where the thermally expandable micro particle containing composition layer 11 has a large amount of dissolved oxygen, the amount of radicals to be generated is suppressed, and the polymerization (photopolymerization) does not sufficiently progress. For this, the polymerization rate, molecular weight, and molecular weight distribution of the obtained polymer may be affected. For this reason, before the thermally expandable micro particle containing composition layer 11 is formed, the thermally expandable micro particle containing composition may be subjected to a bubbling treatment by an inert gas.

The third step in Production Example 1 is a step of irradiating both surface sides of the sheet obtained in the second step with the active energy beam 14 (see Figure 3). In this step, the thermally expandable micro particle containing

composition layer 11 is irradiated with the active energy ray 14 through the release film 12. The thermally expandable micro particle containing composition layer 11 is photocured and turned into the thermally expandable micro particle containing adhesive layer 13. In the sheet obtained in the second step, the thermally expandable micro particle containing composition layer 11 is blocked by the release film 12 from oxygen that causes inhibition of the photocuring reaction. In Figure 3, both surface sides of the sheet are irradiated with the active energy ray 14. Alternatively, only one surface thereof may be irradiated with the active energy ray 14.

Examples of the active energy ray 14 include ionizing radiation such as $\alpha$ rays, $\beta$ rays, $\gamma$ rays, neutron beams, and electron beams and ultraviolet rays as describe above. Among these, preferred are ultraviolet rays.

In Production Example 1, in the case where the thermally expandable micro particle containing composition layer 11 is cured, it is preferably cured such that the polymerization rate is not less than 90% by weight. The non-reacted monomer may be removed by providing a drying step. The polymerization rate is calculated by the same method as in the case of the polymerization rate of the partially polymerized product.

Figure 4 shows the expandable micro particle-containing adhesive layer 13 obtained in Production Example 1. Namely, by the first step to the third step, a sheet having the release film 12 on both surface sides of the thermally expandable micro particle-containing adhesive layer 13 (a sheet having a layer configuration of release film 12/thermally expandable micro particle containing adhesive layer 13/release film 12) is obtained.

The fourth step (1d) in Production Example 1 is a step of laminating the expandable micro particle-containing adhesive layer 13 obtained in third step to the heat-shrinkable film 15 (see Figure 5). Namely, the release film 12 is peeled off from one surface side of the thermally expandable micro particle containing adhesive layer 13 to expose the surface of the adhesive layer, and the exposed surface of the adhesive layer is laminated to one surface of the heat-shrinkable film 15. Similarly, the thermally expandable micro particle containing adhesive layer 13 is laminated to the other side of the heat-shrinkable film 15. By this step, the pressure-sensitive adhesive sheet 16 having the thermally expandable micro particle containing adhesive layer 13 on both surfaces of the heat-shrinkable film 15 (a sheet having a layer configuration of release film 12/thermally expandable micro particle containing adhesive layer 13/heat-shrinkable film 15/thermally expandable micro particle containing adhesive layer 13/release film 12) is obtained.

Figure 6 shows the pressure-sensitive adhesive sheet 16 obtained in Production Example 1. The pressure-sensitive adhesive sheet 16 is a double-sided pressure-sensitive adhesive sheet in which the thermally expandable micro particle containing adhesive layer 13 is formed on both surface sides of the heat-shrinkable film 15. In Production Example 1, the thermally expandable micro particle containing adhesive layer 13 provided on both surface sides of the heat-shrinkable film 15 may be formed with the same thermally expandable micro particle containing composition, or may be formed with different thermally expandable micro particle containing compositions. Moreover, an adhesive layer different from the thermally expandable micro particle containing adhesive layer may be provided as long as the effect of the pressure-sensitive adhesive sheet according to the present invention is not impaired.

Thus, the pressure-sensitive adhesive sheet according to the present invention is preferably produced through the first step of applying the thermally expandable micro particle containing composition onto the release-treated surface of the release film to form a thermally expandable micro particle containing composition layer, the second step of laminating the release-treated surface of the release film to the thermally expandable micro particle containing composition layer formed in the first step, the third step of irradiating with the active energy ray to form the thermally expandable micro particle containing adhesive layer, and the fourth step of laminating the thermally expandable micro particle containing adhesive layer to both surfaces of the heat-shrinkable film.

A proper undercoat layer may be provided on the surface of the heat-shrinkable film 15 in order to improve the anchoring force to the expandable micro particle-containing adhesive layer 13. Namely, in the fourth step in Production Example 1, an undercoat layer may be provided in the heat-shrinkable film 15 in advance, and the expandable micro particle-containing adhesive layer 13 obtained in third step may be laminated to the surface of the undercoat layer. Figure 7 shows the pressure-sensitive adhesive sheet 16 in which the undercoat layer 17 is provided on the surface of the heat-shrinkable film 15.

The undercoat layer usable in the pressure-sensitive adhesive sheet according to the present invention is not particularly limited as long as it can enhance the anchoring force between the substrate and the adhesive layer, and particularly can sufficiently keep the adhesion of the two layers after the heat treatment. For example, an acrylic adhesive layer containing no thermally expandable microsphere can be suitably used. The thickness of the undercoat layer is not particularly limited. The thickness can be usually approximately 1 to 100 $\mu$m, preferably approximately 10 to 80 $\mu$m, and more preferably approximately 30 to 70 $\mu$m.

In the pressure-sensitive adhesive sheet according to the present invention, an adhesive force (an adhesive strength) to an aluminum plate (a peel angle of 180°, tensile rate of 300 mm/min, under an atmosphere of 23°C) is not particularly limited. The adhesive force is preferably not less than 8 N/20 mm (for example, 8 to 100 N/20 mm), more preferably not less than 10 N/20 mm (for example, 10 to 90 N/20 mm), and still more preferably not less than 15 N/20 mm (for example, 15 to 80 N/20 mm). If the 180° peel adhesive strength is less than 8 N/20 mm, sufficient adhesiveness to the adherend may not be demonstrated. If the 180° peel adhesive strength is excessively large (for example, more

than 100 N/20 mm), the peelability and disassociation property may be affected.

The adhesive properties of the pressure-sensitive adhesive sheet according to the present invention such as the adhesive force are adjusted by properly selecting the composition of the adhesive composition that comprises the adhesive layer (composition of the adhesive composition in the present invention), the kind of the thermally expandable micro particle and the amount thereof to be used, the curing method in production of the adhesive layer (for example, the method for irradiating with the active energy ray), and the thickness of the adhesive layer.

In the pressure-sensitive adhesive sheet according to the present invention, a "floating distance" determined by a repulsion resistance test described in Examples later is particularly limited, and is preferably less than 10 mm, more preferably less than 8 mm, and still more preferably less than 5 mm. At a floating distance more than 10 mm, the pressure-sensitive adhesive sheet is likely to be peeled off from the adherend when stress is applied for a long time, and the adhesion reliability may be reduced.

Usually, if stress is applied to the pressure-sensitive adhesive sheet for a long time in the state where the sheet is bonded to the adherend, phenomena may occur such that the pressure-sensitive adhesive sheet is "peeled," "lifted," "partially peeled," and "sheared" from the adherend. The "repulsion resistance" herein means the properties that enable suppression of the phenomena.

In the pressure-sensitive adhesive sheet according to the present invention, a "shear distance(moving distance)" determined by a holding power test described in Examples later is not particularly limited, and is preferably less than 5.0 mm, more preferably less than 1.0 mm, and still more preferably less than 0.5 mm. At a shear distance more than 1 mm, an adhesive tape may be peeled off from the adherend when stress is applied to the adhesive tape for a long time, reducing the adhesion reliability.

Preferably, the pressure-sensitive adhesive sheet according to the present invention has good evaluation in a heat disassociation test described in Examples later. If the evaluation by the heat disassociation test is poor, sufficient peelability and disassociation property may not be demonstrated by heating when the pressure-sensitive adhesive sheet is peeled off from the adherend.

The heat treatment when the pressure-sensitive adhesive sheet according to the present invention is peeled off from the adherend is not particularly limited, and a proper heating method can be used to perform the heat treatment. Examples thereof include a hot plate, a line heater (contact type heater that can partially heat), a hot air dryer, an infrared lamp, a near infrared lamp, an air dryer, and a heat treatment using heating water. The temperature of the heat treatment is not particularly limited as long as it is a foaming start temperature of the thermally expandable micro particle or more. The temperature is properly set depending on the state of the surface of the adherend, the kind of the thermally expandable micro particle, heat resistance of the adherend, and the heating method (heat capacity, heating device). More specific examples of the heat treatment include heating by a hot plate at a temperature: 100 to 250°C for 5 to 90 seconds and heating by a hot air dryer at a temperature: 100 to 250°C for 5 to 15 minutes.

The adherend to which the pressure-sensitive adhesive sheet according to the present invention is applied is not particularly limited. Examples thereof include plastic adherends, metallic adherends, fiber adherends, paper adherends, inorganic material adherends, and composite material adherends (adherends formed with at least two of various materials such as plastics (resins), metals, fibers, papers, inorganic materials). Among these, preferable examples of the adherend include plastic adherends, metallic adherends, and composite material adherends formed with plastics (resins) and metals.

The resin that forms the plastic adherend is not particularly limited, and examples thereof include polycarbonates, polypropylenes, polyesters, polystyrenes, phenol resins, epoxy resins, polyurethanes, ABS, acrylic resins, and a mixed resin thereof. The metal that forms the metallic adherend is not particularly limited, and examples thereof include iron, aluminum, copper, nickel, chromium, manganese, magnesium, zinc, tin, titanium, and alloys thereof (for example, stainless steel).

The shape of the surface of the adherend to which the pressure-sensitive adhesive sheet according to the present invention is applied is not particularly limited. Examples thereof include a smooth shape, a curved surface, and a shape in combination of a flat surface and a curved surface.

The pressure-sensitive adhesive sheet according to the present invention has the adhesive layer (adhesive layer in the present invention) comprised of the adhesive composition (adhesive composition in the present invention) containing the acrylic copolymer containing the monomer mixture containing the specific monomer as the constituent. For this reason, the sheet has high adhesive properties such as the adhesive force to various adherend such as the metallic adherend. For this reason, the pressure-sensitive adhesive sheet according to the present invention is suitably used for applications of bonding. Example of the applications of bonding includes application of bonding a member to member, application of bonding a housing to a member.

Further, the pressure-sensitive adhesive sheet according to the present invention has the adhesive layer (adhesive layer in the present invention). For this reason, the sheet has high adhesion reliability, and particularly high repulsion resistance and holding properties. For this reason, the pressure-sensitive adhesive sheet according to the present invention is particularly effective in the case where the adherend has a curved surface, and is suitably used for

application of bonding members having a curved surface or bonding a housing having a curved surface to a member having a curved surface.

The pressure-sensitive adhesive sheet according to the present invention uses the heat-shrinkable film as the substrate, and has the adhesive layer (adhesive layer in the present invention) containing the thermally expandable microsphere. For this reason, when the pressure-sensitive adhesive sheet is peeled off from the adherend, the adhesive force can be easily reduced by heating to peel and disassociate the sheet. This is because by use of the heat-shrinkable film as the substrate, the heat-shrinkable film shrinks by heat to deform the adhesive layer, and as a result, a force to peel the sheet off from the adherend is given. Additionally, accompanied by expansion and/or foaming of the thermally expandable micro particle in the adhesive layer by the heat, the thermally expandable micro particle containing adhesive layer expands and deforms. As a result, the surface of the thermally expandable micro particle containing adhesive layer is deformed to have depressions and projections, and the adhesive force is reduced or lost.

Accordingly, the pressure-sensitive adhesive sheet according to the present invention is suitably used in applications needed for rework and recycling.

The pressure-sensitive adhesive sheet according to the present invention has a high adhesive force and high adhesion reliability, particularly high repulsion resistance and holding power. Accordingly, the sheet is suitably used in application of bonding in a variety of fields such as automobiles, machine parts, electric appliances, and building materials (for example, application of bonding a part to a part or bonding a part to a housing.) Among these, the pressure-sensitive adhesive sheet according to the present invention is particularly suitably used in applications of bonding needed for recycling and rework because the sheet has high peelability and disassociation property by heat. The double-sided pressure-sensitive adhesive sheet according to the present invention is not limited to the applications above, and is used in applications of bonding a member semipermanently.

Examples

Hereinafter, the present invention will be described more in detail based on Examples, but the present invention will not be limited by these Examples.

(Evaluation)

In Examples and Comparative Examples, evaluations were performed as follows.

(Evaluation of adhesive force)

Each of the pressure-sensitive adhesive sheets produced in Examples and Comparative Examples was cut into a strip having a width: 20 mm and a length: 50 mm, and used as a sample for measuring the adhesive force. In the case of the pressure-sensitive adhesive sheet in which the adhesive layer is provided on one surface side of the heat-shrinkable film, the produced pressure-sensitive adhesive sheet was used as it was. On the other hand, in the case of the double-sided pressure-sensitive adhesive sheet in which the adhesive layer is provided on both surface sides of the heat-shrinkable film, the release film provided on the adhesive layer on one side was peeled off, and a trade name "Lumirror S-10 #50" made by Toray Industries, Inc.) as a PET film was laminated to the exposed adhesive surface, the surface of the PET film being not release-treated. The obtained sheet was cut into the size, and used as a sample for measuring the adhesive force.

An aluminum plate (thickness of 0.5 mm x width of 100 mm x length of 100 mm) was rubbed and washed with a cleaning waste impregnated with isopropyl alcohol backward and forward 10 times to obtain a clean aluminum plate. The sample for measurement having the adhesive surface exposed by removing the release film was press bonded to the clean aluminum plate under an atmosphere of 23°C on the condition of a 2 kg roller and 1 reciprocation. Thereby, the sample for measurement was laminated to the aluminum plate. Then, aging was performed for 48 hours under an atmosphere of 40°C.

After aging, under an atmosphere of 23°C, using a tensile tester (apparatus name "Multifunctional, Easy-to-Use Tensile and Compression Testing Machine TG-1 kN" made by Minebea Co., Ltd.), the sample for measurement was peeled off from the aluminum plate at a tensile rate: 300 mm/min in the peel direction of 180°. Thus, the 180° peel adhesive strength was measured.

Then, the case in which the 180° peel adhesive strength was not less than 8 [N/25 mm] was evaluated as good (O), and the case where the 180° peel adhesive strength was less than 8 [N/25 mm] was evaluated as bad (×).

(Evaluation of heat disassociation)

Each of the pressure-sensitive adhesive sheets produced in Examples and Comparative Examples was cut

into a square having a width: 20 mm and a length: 20 mm, and used as the sample for measurement.
An aluminum plate (thickness of 0.5 mm x width of 100 mm x length of 50 mm) was rubbed and washed with a cleaning waste impregnated with isopropyl alcohol backward and forward 10 times to obtain a clean aluminum plate.
The sample for measurement having the adhesive surface exposed by removing the release film was press bonded to the clean aluminum plate under an atmosphere of 23°C on the condition of a 2 kg roller and 1 reciprocation. Thereby, the sample for measurement was laminated to the aluminum plate. In the case where the sample for measurement was the double-sided pressure-sensitive adhesive sheet in which the adhesive layer is provided on both surface sides of the heat-shrinkable film, the aluminum plate was laminated to the surface of the adhesive layer on one surface side thereof, and the release film on the other side thereof was peeled off to expose the adhesive surface. The aluminum plate was laminated to the exposed adhesive surface by the same method as above (namely, the double-sided pressure-sensitive adhesive sheet was bonded to the two aluminum plates).
Then, the sample for measurement was aged for 1 hour under an atmosphere of 23°C to obtain a sample for evaluating heat disassociation.
While the state where the sample for measurement was bonded to the aluminum plate was kept, the sample for evaluating heat disassociation was placed in a hot air dryer, and subjected to a heat treatment at 145°C for 4 minutes.
The state of the sample for evaluating heat disassociation after the heat treatment was completed was checked, and the heat disassociation property was evaluated on the following criterion.
Good (O) : the case where the sample for measurement is naturally peeled off from the aluminum plate, or the case where the sample for measurement can be easily peeled off from the aluminum plate
Bad (X) : the case where the sample for measurement cannot be easily peeled off from the aluminum plate

(Evaluation of repulsion resistance)

In order to evaluate the pressure-sensitive adhesive sheets produced in Examples and Comparative Examples for repulsion resistance, a sample for a repulsion test was produced by the following procedure.
In the case of the double-sided pressure-sensitive adhesive sheet in which the adhesive layer is provided on both surface sides of the heat-shrinkable film, one release film B was peeled off to expose the adhesive surface, and the exposed adhesive surface was laminated to an aluminum plate (aluminum plate having the size of the width: 10 mm x length: 90 mm, thickness: 0.4 mm) to obtain a sample for a repulsion resistance test.
In the case of the pressure-sensitive adhesive sheet in which the adhesive layer is provided on one surface side of the heat-shrinkable film, an undercoat layer described later was laminated to the surface of the heat-shrinkable film, and laminated to an aluminum plate (aluminum plate having the size of the width: 10 mm x length: 90 mm, thickness: 0.4 mm) with the undercoat layer therebetween. Thus, a sample for a repulsion resistance test was obtained.
Next, the sample for a repulsion resistance test was curved with the side of the pressure-sensitive adhesive sheet (surface side of the release film) facing outward at a curvature of R50, namely, along the circumference of a circle having a radius of 20 mm.
After curving, the release film was peeled off from the sample for a repulsion resistance test to expose the adhesive surface. Next, using a laminator, the sample for a repulsion resistance test having the exposed adhesive surface was press bonded to an acrylic plate (transparent, a trade name "ACRYLITE," made by MITSUBISHI RAYON CO., LTD.) without lifting(floating). The sample for a repulsion resistance test laminated to the acrylic plate was left at room temperature (23°C) for 7 hours. The lifting distance from the acrylic plate (distance of the sample lifted from the acrylic plate) was measured at both ends of the sample for a repulsion resistance test (both ends in the length direction), and the values were summed. The total value was defined as the "lifting distance (floating distance)."
The case at a lifting distance less than 10 mm was evaluated as good (O), and the case at a lifting distance not less than 10 mm was evaluated as bad (X).

(Evaluation of holding power)

In the same manner as in the case of the sample for measuring the adhesive force produced in evaluation of the adhesive force, a sample for measuring holding power was obtained (only the size was changed to the width: 10 mm and the length: 100 mm). A Bakelite plate (width: 25 mm, length: 125 mm, thickness of 20 mm) was rubbed and washed with a cleaning waste impregnated with isopropyl alcohol backward and forward 10 times to obtain a clean Bakelite plate.
The sample for measurement having the adhesive surface exposed by removing the release film was press bonded to the clean Bakelite plate under an atmosphere of 23°C on the condition of a 2 kg roller and 1 reciprocation in the state where the bonding area having a width 10 mm and a length 20 mm was obtained and part of the test piece was projected from the Bakelite plate. Thereby, the sample for measurement was laminated to the Bakelite plate. The sample was preserved under an atmosphere of 60°C for 30 minutes. Then, the Bakelite plate was suspended under an environment

of 60°C, and left for 2 hours in the state where load of 500 g was applied to the free end of the test piece (portion projected from the Bakelite plate). The moving distance (shear distance) of the test piece was checked after 2 hours had passed. The case at a moving distance less than 5 mm was evaluated as good (O), and the case at a moving distance not less than 5 mm or the case where the test piece was dropped was evaluated as bad (X).

(Preparation of thermally expandable micro particle containing composition A)

100 parts by weight of the monomer mixture comprising 2-ethylhexyl acrylate (2EHA): 70 parts by weight, N-vinylcaprolactam (NVC): 20 parts by weight, and isobornyl acrylate (IBXA): 10 parts by weight, 1-hydroxycyclohexyl-phenyl-ketone (a trade name "IRGACURE 184," made by BASF Japan Ltd.): 0.05 parts by weight as the photopolymerization initiator, and 2,2-dimethoxy-1,2-diphenylethane-1-one (a trade name "IRGACURE 651," made by BASF Japan Ltd.): 0.05 parts by weight as the photopolymerization initiator were placed into a four-necked flask, and irradiated with ultraviolet rays under a nitrogen atmosphere until the viscosity (BH viscosity meter No. 5 rotor, 10 rpm, temperature of 30°C) reached approximately 15 Pa.s, and photopolymerized. Thereby, a partially polymerized monomer syrup (partially polymerized product of the monomer mixture) was obtained. The polymerization rate of the partially polymerized monomer syrup was 5.9% by weight.
A thermally expandable micro particle (foaming agent, trade name "EXPANCEL 051 DU40," Eka Chemials AB Expancel): 20 parts by weight and 1,6-hexanediol diacrylate (HDDA): 0.04 parts by weight as polyfunctional (meth)acrylate were added to the partially polymerized monomer syrup: 100 parts by weight, and these were uniformly mixed to obtain a thermally expandable micro particle containing composition A.

(Preparation of thermally expandable micro particle containing composition B)

A thermally expandable micro particle containing composition B was obtained in the same manner as in the case of the thermally expandable micro particle containing composition A except that a monomer mixture comprising lauryl acrylate (LA) : 80 parts by weight and N-vinylcaprolactam (NVC): 20 parts by weight was used as the monomer mixture. The partially polymerized monomer syrup of the polymerization rate was 14% by weight.

(Preparation of thermally expandable micro particle containing composition C)

A thermally expandable micro particle containing composition C was obtained in the same manner as in the case of the thermally expandable micro particle containing composition A except that a monomer mixture comprising 2-ethylhexyl acrylate (2EHA): 70 parts by weight, N-vinyl-2-pyrrolidone (NVP): 20 parts by weight, and isobornyl acrylate (IBXA): 10 parts by weight was used as the monomer mixture. The polymerization rate of the partially polymerized monomer syrup was 8.5% by weight.

(Preparation of thermally expandable micro particle containing composition D)

A thermally expandable micro particle containing composition D was obtained in the same manner as in the case of the thermally expandable micro particle containing composition A except that a monomer mixture comprising 2-ethylhexyl acrylate (2EHA): 70 parts by weight, N-vinylcaprolactam (NVC): 20 parts by weight, and tert-butyl acrylate (t-BA): 10 parts by weight was used as the monomer mixture. The polymerization rate of the partially polymerized monomer syrup was 6.9% by weight.

(Preparation of thermally expandable micro particle containing composition E)

A thermally expandable micro particle containing composition E was obtained in the same manner as in the case of the thermally expandable micro particle containing composition A except that a monomer mixture comprising lauryl acrylate (LA) : 75 parts by weight, N-vinyl-2-pyrrolidone (NVP): 15 parts by weight, and isobornyl acrylate (IBXA) : 10 parts by weight was used as the monomer mixture. The polymerization rate of the partially polymerized monomer syrup was 12.6% by weight.

(Preparation of thermally expandable micro particle containing composition F)

A thermally expandable micro particle containing composition F was obtained in the same manner as in the case of the thermally expandable micro particle containing composition A except that a monomer mixture comprising 2-ethylhexyl acrylate (2EHA): 60 parts by weight, N,N-dimethylacrylamide (DMAA): 30 parts by weight, and isobornyl acrylate (IBXA): 10 parts by weight was used as the monomer mixture. The polymerization rate of the partially polymerized

monomer syrup was 12.6% by weight.

(Preparation of thermally expandable micro particle containing composition G)

A thermally expandable micro particle containing composition G was obtained in the same manner as in the case of the thermally expandable micro particle containing composition A except that a monomer mixture comprising 2-ethylhexyl acrylate (2EHA): 70 parts by weight, N-vinylcaprolactam (NVC): 20 parts by weight, and dicyclopentanyl acrylate (DCPA): 10 parts by weight was used as the monomer mixture. The polymerization rate of the partially polymerized monomer syrup was 6.9% by weight.

(Preparation of thermally expandable micro particle containing composition H)

A thermally expandable micro particle containing composition H was obtained in the same manner as in the case of the thermally expandable micro particle containing composition A except that a monomer mixture comprising 2-ethylhexyl acrylate (2EHA): 90 parts by weight and isobornyl acrylate (IBXA): 10 parts by weight was used as the monomer mixture. The polymerization rate of the partially polymerized monomer syrup was 11.7% by weight.

(Preparation of thermally expandable micro particle containing composition I)

A thermally expandable micro particle containing composition I was obtained in the same manner as in the case of the thermally expandable micro particle containing composition A except that a monomer mixture comprising 2-ethylhexyl acrylate (2EHA): 75 parts by weight and acrylic acid (AA): 25 parts by weight was used as the monomer mixture. The polymerization rate of the partially polymerized monomer syrup was 7.0% by weight.

(Preparation of thermally expandable micro particle containing composition J)

A thermally expandable micro particle containing composition J was obtained in the same manner as in the case of the thermally expandable micro particle containing composition A except that a monomer mixture comprising 2-ethylhexyl acrylate (2EHA): 90 parts by weight and acrylic acid (AA): 10 parts by weight was used as the monomer mixture. The polymerization rate of the partially polymerized monomer syrup was 6.9% by weight.

(Preparation of composition for undercoat layer)

100 parts by weight of the monomer mixture comprising 2-ethylhexyl acrylate (2EHA): 90 parts by weight and acrylic acid (AA): 10 parts by weight, 1-hydroxy-cyclohexyl-phenyl-ketone (a trade name "IRGACURE 184," made by BASF Japan Ltd.): 0.05 parts by weight as the photopolymerization initiator, and 2,2-dimethoxy-1,2-diphenylethane-1-one (a trade name "IRGACURE 651," made by BASF Japan Ztd.): 0.05 parts by weight as the photopolymerization initiator were placed in a four-necked flask, and irradiated with ultraviolet rays under a nitrogen atmosphere until the viscosity (BH viscosity meter No.5 rotor, 10 rpm, temperature of 30°C) reached approximately 15 Pa·s, and photopolymerized. Thereby, a partially polymerized monomer syrup (partially polymerized product of the monomer mixture) was obtained. The polymerization rate of the partially polymerized monomer syrup was 8% by weight.
1,6-hexanediol diacrylate (HDDA): 0.04 parts by weight as polyfunctional (meth)acrylate was added to the partially polymerized monomer syrup: 100 parts by weight, and these were uniformly mixed to obtain a composition for an undercoat layer.

(Usage Example 1 of release film)

As the release film, a polyester film (a trade name "MRN-38," made by Mitsubishi Plastics, Inc.) having one surface release-treated with a silicone release treating agent was used. The release film was called a "release film A."

(Usage Example 2 of release film)

As the release film, a polyester film (a trade name "MRF-38," made by Mitsubishi Plastics, Inc.) having one surface release-treated with a silicone release treating agent was used. The release film was called a "release film B."

(Preparation of undercoat layer)

The composition for an undercoat layer was applied onto the release-treated surface of the release film B so

as to have a thickness of 50 μm, to form a composition layer for an undercoat layer. The release-treated surface of the release film A was placed on the composition layer for an undercoat layer to obtain a sheet having the composition layer for an undercoat layer between two release films.

The sheet having the composition layer for an undercoat layer was irradiated with ultraviolet rays on the condition of an illuminance: 4 mW/cm$^2$ and a light amount: 1200 mJ/cm$^2$ to photocure the composition layer for an undercoat layer. Thus, the undercoat layer was produced.
Then, an undercoat layer sheet having release film B/undercoat layer/release film A was obtained.

(Example 1)

The thermally expandable micro particle containing composition A was applied onto the release-treated surface of the release film B so as to have a thickness of 50 μm to form a thermally expandable micro particle containing composition layer A. The release-treated surface of the release film A was placed on the thermally expandable micro particle containing composition layer A to obtain a sheet having the thermally expandable micro particle containing composition layer A between two release films (thermally expandable micro particle containing composition layer sheet).
The thermally expandable micro particle containing composition layer sheet was irradiated with ultraviolet rays on the condition of an illuminance: 4 mW/cm$^2$ and a light amount: 1200 mJ/cm$^2$ to photocure the thermally expandable micro particle containing composition layer A. Thus, an adhesive layer A (layer comprising the adhesive composition) was produced. Then, an adhesive layer sheet having both surfaces of the adhesive layer protected by the release film was obtained.
The solvent-insoluble content of the adhesive layer A was 79.8% by weight.

The release film A was peeled off from the undercoat layer sheet, the exposed surface of the undercoat layer was laminated to one surface of the heat-shrinkable film (a trade name "SPACECLEAN S7200," made by TOYOBO CO., LTD., thickness of 30 μm, shrinkage rate at 145°C of 35%), and the undercoat layer was transferred onto the one surface of the heat-shrinkable film. Next, the other release film B provided on the undercoat layer was peeled off.
Further, the release film A was peeled off from the adhesive layer A of the adhesive layer sheet, and the exposed adhesive surface was laminated to the surface of the undercoat layer of the heat-shrinkable film having the undercoat layer. Thus, a pressure-sensitive adhesive sheet having a configuration of heat-shrinkable film/undercoat layer/adhesive layer A/release film B was produced.

(Example 2)

A pressure-sensitive adhesive sheet having the adhesive layer B provided on one surface of the heat-shrinkable film with the undercoat layer therebetween was produced in the same manner as in Example 1 except that instead of the thermally expandable micro particle containing composition A, the thermally expandable micro particle containing composition B was used.

(Example 3)

A pressure-sensitive adhesive sheet having the adhesive layer C provided on one surface of the heat-shrinkable film with the undercoat layer therebetween was produced in the same manner as in Example 1 except that instead of the thermally expandable micro particle containing composition A, the thermally expandable micro particle containing composition C was used.

(Example 4)

A pressure-sensitive adhesive sheet having the adhesive layer D provided on one surface of the heat-shrinkable film with the undercoat layer therebetween was produced in the same manner as in Example 1 except that instead of the thermally expandable micro particle containing composition A, the thermally expandable micro particle containing composition D was used.

(Example 5)

A pressure-sensitive adhesive sheet having the adhesive layer E provided on one surface of the heat-shrinkable film with the undercoat layer therebetween was produced in the same manner as in Example 1 except that instead of the thermally expandable micro particle containing composition A, the thermally expandable micro particle containing composition E was used.

(Example 6)

A pressure-sensitive adhesive sheet having the adhesive layer F provided on one surface of the heat-shrinkable film with the undercoat layer therebetween was produced in the same manner as in Example 1 except that instead of the thermally expandable micro particle containing composition A, the thermally expandable micro particle containing composition F was used.

(Example 7)

A pressure-sensitive adhesive sheet having the adhesive layer G provided on one surface of the heat-shrinkable film with the undercoat layer therebetween was produced in the same manner as in Example 1 except that instead of the thermally expandable micro particle containing composition A, the thermally expandable micro particle containing composition G was used.

(Comparative Example 1)

A pressure-sensitive adhesive sheet having the adhesive layer B provided on one surface of a non-heat shrinkable film with the undercoat layer therebetween was produced in the same manner as in Example 1 except that the thermally expandable micro particle containing composition B was used instead of the thermally expandable micro particle containing composition A, and a polyethylene terephthalate film (a trade name "Lumirror S-10 #50," made by Toray Industries, Inc., thickness of 50 μm, heat shrinkage rate at 80 to 180°C of not more than 1.5%) was used instead of the heat-shrinkable film.

(Comparative Example 2)

A pressure-sensitive adhesive sheet having the adhesive layer H provided on one surface of the heat-shrinkable film with the undercoat layer therebetween was produced in the same manner as in Example 1 except that instead of the thermally expandable micro particle containing composition A, the thermally expandable micro particle containing composition H was used.

(Comparative Example 3)

A pressure-sensitive adhesive sheet having the adhesive layer I provided on one surface of the heat-shrinkable film with the undercoat layer therebetween was produced in the same manner as in Example 1 except that instead of the thermally expandable micro particle containing composition A, the thermally expandable micro particle containing composition I was used.

(Comparative Example 4)

A pressure-sensitive adhesive sheet having the adhesive layer J provided on one surface of the heat-shrinkable film with the undercoat layer therebetween was produced in the same manner as in Example 1 except that instead of the thermally expandable micro particle containing composition A, the thermally expandable micro particle containing composition J was used.

[Table 3]

Table 3

| | Composition | Solvent-insoluble content [% by weight] | Adhesive force | | Heat disassociation property | Repulsion resistance | | Retention | |
|---|---|---|---|---|---|---|---|---|---|
| | | | [N/20 mm] | | | Lifting distance [mm] | | Moving distance [mm] | |
| Example 1 | 2EHA/NVC/ IBXA=70/20/10 | 79.8 | 17.3 | ○ | ○ | 0 | ○ | 0.2 | ○ |

(continued)

| | Composition | Solvent-insoluble content [% by weight] | Adhesive force [N/20 mm] | | Heat disassociation property | Repulsion resistance Lifting distance [mm] | | Retention Moving distance [mm] | |
|---|---|---|---|---|---|---|---|---|---|
| Example 2 | LA/NVC=80/20 | 81.8 | 12.4 | ○ | ○ | 2.25 | ○ | 0.2 | ○ |
| Example 3 | 2EHA/NVP/ IBXA=70/20/10 | 84.4 | 15.3 | ○ | ○ | 0.75 | ○ | 0.2 | ○ |
| Example 4 | 2EHA/NVC/t-BA=70/20/10 | 78.5 | 13.6 | ○ | ○ | 1.25 | ○ | 0.2 | ○ |
| Example 5 | LA/NVP/ IBXA=75/15/10 | 79.4 | 8.6 | ○ | ○ | 2.5 | ○ | 0.3 | ○ |
| Example 6 | 2EHA/DMAA/ IBXA=60/30/10 | 74.9 | 14.5 | ○ | ○ | 2.6 | ○ | 0.2 | ○ |
| Example 7 | 2EHA/NVC/ DCPA=70/20/10 | 87 | 13.3 | ○ | ○ | ○ | ○ | 0.2 | ○ |
| Comparative Example 1 | LA/NVC=80/20 | 81.8 | 11.8 | ○ | × | ○ | ○ | 0.2 | ○ |
| Comparative Example 2 | 2EHA/ IBXA=90/10 | 76.5 | 4.1 | × | ○ | 33.5 | × | Dropped (4 minutes) | × |
| Comparative Example 3 | 2EHA/AA=75/25 | 84.6 | 7.5 | × | × | ○ | ○ | 0.3 | ○ |
| Comparative Example 4 | 2EHA/AA=90/10 | 82.6 | 19.3 | ○ | × | 8.5 | ○ | 0.5 | ○ |

(Example 8)

The release film A was peeled off from the undercoat layer sheet, and the exposed surface of the undercoat layer was laminated to one surface of the heat-shrinkable film (a trade name "SPACECLEAN S7200," made by TOYOBO CO., LTD., thickness of 30 μm). Next, the release film A was peeled off from the undercoat layer sheet, and the exposed surface of the undercoat layer was laminated to the other surface of the heat-shrinkable film. Then, the two release films B provided on the undercoat layer were peeled off to obtain a structure in which the undercoat layer was transferred onto both surfaces of the heat-shrinkable film.
Further, using two of the adhesive layer sheets produced in Example 1, the release film A of the adhesive layer sheet was peeled, and the exposed adhesive layer A was laminated to the undercoat layer in the structure. This operation was repeated twice to provide the adhesive layer A on both surface sides of the heat-shrinkable film. Then, a pressure-sensitive adhesive sheet having a configuration of release film B/adhesive layer A/undercoat layer/heat-shrinkable film/ undercoat layer/adhesive layer A/release film B was produced.

(Example 9)

A pressure-sensitive adhesive sheet having the adhesive layer B provided on both surfaces of the heat-shrinkable film with the undercoat layer therebetween was produced in the same manner as in Example 8 except that instead of the thermally expandable micro particle containing composition A, the thermally expandable micro particle containing composition B was used (instead of the adhesive layer A, the adhesive layer B was used).

(Comparative Example 5)

A pressure-sensitive adhesive sheet having the adhesive layer B provided on both surfaces of a non-heat shrinkable film with the undercoat layer therebetween was produced in the same manner as in Example 8 except that

the thermally expandable laminated particle containing composition B was used instead of the thermally expandable laminated particle containing composition A (the adhesive layer B was used instead of the adhesive layer A), and a polyethylene terephthalate film (a trade name "Lumirror S-10 #50," made by Toray Industries, Inc., thickness of 50 μm) was used instead of the heat-shrinkable film.

[Table 4]

Table 4

| | Composition | Solvent-insoluble contents [% by weight] | Adhesive force | | Heat disassociation property | Repulsion resistance | | Retention | |
|---|---|---|---|---|---|---|---|---|---|
| | | | [N/20 mm] | | | Lifting distance [mm] | | Moving distance [mm] | |
| Example 8 | 2EHA/NVC/ IBXA=70/20/10 | 79.8 | 20 | ○ | ○ | ○ | ○ | 0.3 | ○ |
| Example 9 | LA/NVC=80/20 | 81.8 | 8.3 | ○ | ○ | 2.9 | ○ | 0.3 | ○ |
| Comparative Example 5 | LA/NVC=80/20 | 81.8 | 6.2 | × | × | 2.4 | ○ | 0.3 | ○ |

In Examples, the pressure-sensitive adhesive sheet demonstrated a good adhesive force to the adherend and adhesion reliability (particularly, repulsion resistance and holding power), and could be easily peeled off (disassociated) by heating. For this reason, the pressure-sensitive adhesive sheet can be used in applications of rework and recycling.

In Comparative Examples 1 and 5 using no heat-shrinkable film, the pressure-sensitive adhesive sheet demonstrated good adhesion reliability (repulsion resistance, holding properties), but could not be peeled off by heating. In Comparative Example 2 using the acrylic copolymer not containing the monomer (a2) as the constituent as the adhesive layer, the pressure-sensitive adhesive sheet could be easily peeled off, but initial adhesion and adhesion reliability (repulsion resistance, holding properties) were poor. Similarly, in Comparative Examples 3 and 4 not containing the monomer (a2) but containing acrylic acid, the pressure-sensitive adhesive sheet demonstrated good adhesion reliability, but could not be peeled off by heating.

Reference Signs List

1a First step in Production Example 1
1b Second step in Production Example 1
1c Third step in Production Example 1
1d Fourth step in Production Example 1
11 Thermally expandable micro particle containing composition layer
12 Release film
13 Thermally expandable micro particle-containing adhesive layer
14 Active energy ray
15 Heat-shrinkable film
16 Pressure-sensitive adhesive sheet
17 Undercoat layer

## Claims

**1.** A pressure-sensitive adhesive sheet having an adhesive layer on at least one surface of a substrate, wherein
the substrate is a heat-shrinkable film, and

the adhesive layer comprises an adhesive composition comprising an acrylic copolymer and a thermally expandable micro particle, the acrylic copolymer comprising a monomer mixture of the following monomers (a1), (a2), and (a3) in the following contents as a constituent:

(a1) an alkyl (meth)acrylate monomer having an alkyl group having 4 to 12 carbon atoms and having a glass transition temperature less than 0°C when the monomer is formed into a homopolymer: 40 to 90% by weight,
(a2) a monomer having at least one nitrogen atom and one ethylenically unsaturated bond within the molecule: 5 to 40% by weight, and
(a3) a monomer having one ethylenically unsaturated bond within the molecule and having a glass transition temperature of not less than 0°C when the monomer is formed into a homopolymer ((a2) is excluded): 0 to 40% by weight
(the content (% by weight) represents the content of each monomer based on the total weight of the monomers (a1), (a2), and (a3) (100% by weight)).

**2.** The pressure-sensitive adhesive sheet according to claim 1, wherein the content of the thermally expandable micro particle is 10 to 200 parts by weight based on 100 parts by weight of the monomer mixture.

**3.** The pressure-sensitive adhesive sheet according to claim 1 or 2, wherein the monomer (a2) is at least one monomer selected from the group consisting of N,N-dimethylacrylamide, N-vinyl-2-pyrrolidone, and N-vinyl-2-caprolactam.

**4.** The pressure-sensitive adhesive sheet according to any one of claims 1 to 3, wherein the monomer (a3) is a (meth) acrylate monomer having a glass transition temperature of not less than 0°C when the monomer is formed into a homopolymer and a structure in which a (meth)acryloyloxy group is bonded to a tertiary carbon atom, or a (meth) acrylate monomer having a glass transition temperature of not less than 0°C when the monomer is formed into a homopolymer and having a structure in which a (meth)acryloyloxy group is bonded to a carbon atom that constitutes a ring of a monocyclic or polycyclic alicyclic hydrocarbon.

**5.** The pressure-sensitive adhesive sheet according to any one of claims 1 to 4, wherein the monomer (a3) is at least one monomer selected from the group consisting of tert-butyl (meth)acrylate, cyclohexyl (meth)acrylate, isobornyl (meth)acrylate, 1,4-cyclohexanedimethanol mono(meth)acrylate, and dicyclopentanyl (meth)acrylate.

**6.** The pressure-sensitive adhesive sheet according to any one of claims 1 to 5, wherein the heat-shrinkable film is a heat-shrinkable film that shrinks not less than 5% at a temperature of 70 to 180°C.

[Fig.1]

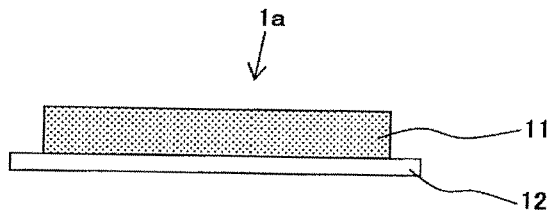


[Fig.2]

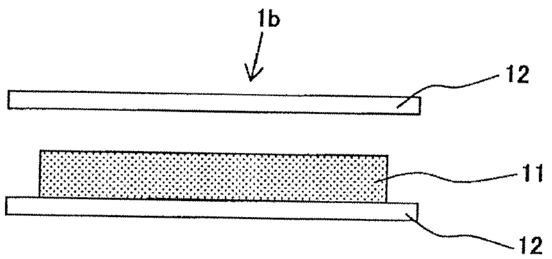


[Fig.3]

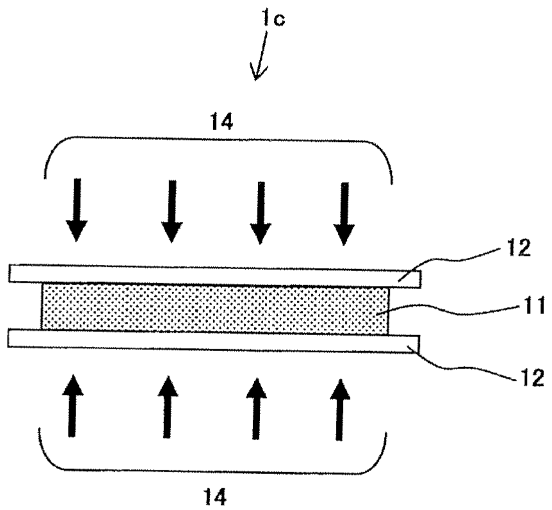


[Fig.4]

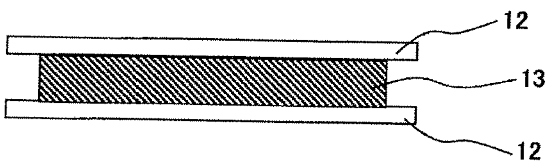

[Fig.5]

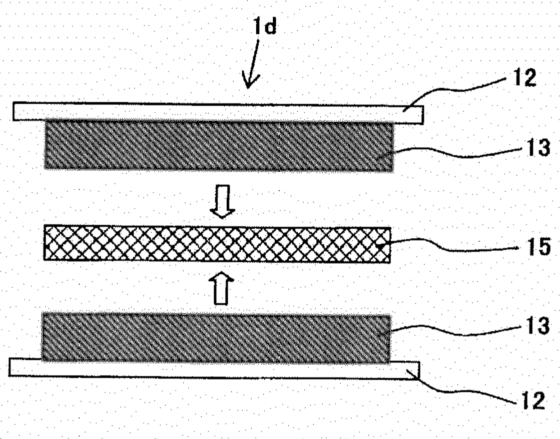


[Fig.6]

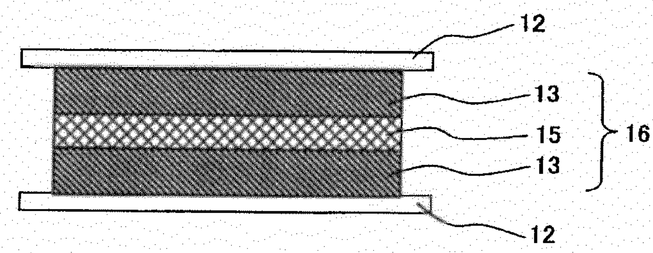


[Fig.7]

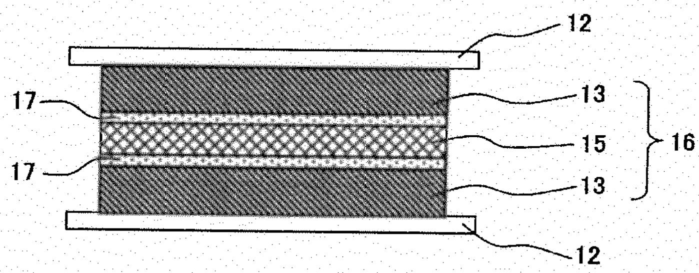

Europäisches Patentamt
European Patent Office
Office européen des brevets

# EUROPEAN SEARCH REPORT

Application Number
EP 12 17 8473

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 204 426 A1 (NITTO DENKO CORP [JP]) 7 July 2010 (2010-07-07) * abstract * * paragraph [0097] - paragraph [0124] * * paragraph [0134] - paragraph [0140] * * paragraph [0193] - paragraph [0202]; claims 1,7-9,13,15 * ----- | 1-6 | INV. C09J7/02 C09J5/06 C09J133/00 |
| X,P | EP 2 452 961 A1 (NITTO DENKO CORP [JP]) 16 May 2012 (2012-05-16) * abstract * * paragraph [0027] - paragraph [0061] * * paragraphs [0107], [0108], [0194]; claims 1-5; tables * ----- | 1-6 | |
| | | | TECHNICAL FIELDS SEARCHED (IPC) |
| | | | C09J |

The present search report has been drawn up for all claims

1

| Place of search | Date of completion of the search | Examiner |
|---|---|---|
| Munich | 20 November 2012 | Meier, Stefan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 12 17 8473

This annex lists the patent family members relating to the patent documents cited in the above-mentioned European search report.
The members are as contained in the European Patent Office EDP file on
The European Patent Office is in no way liable for these particulars which are merely given for the purpose of information.

20-11-2012

| Patent document cited in search report | Publication date | Patent family member(s) | Publication date |
|---|---|---|---|
| EP 2204426 A1 | 07-07-2010 | CN 101835863 A | 15-09-2010 |
| | | EP 2204426 A1 | 07-07-2010 |
| | | JP 2009120807 A | 04-06-2009 |
| | | US 2010215947 A1 | 26-08-2010 |
| EP 2452961 A1 | 16-05-2012 | CN 102464953 A | 23-05-2012 |
| | | EP 2452961 A1 | 16-05-2012 |
| | | JP 2012117041 A | 21-06-2012 |
| | | KR 20120051590 A | 22-05-2012 |
| | | US 2012123046 A1 | 17-05-2012 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2006022189 A
- JP 2001247832 A
- JP 2009120808 A
- JP 2000319600 A
- JP 2001200220 A
- JP S6178887 A
- JP H363381 A
- JP H48782 A
- JP 2010254789 A
- JP 2011500902 A
- JP 2003013015 A


### Non-patent literature cited in the description


- Polymer Handbook. John Wiley & Sons, Inc, 1989